# FASCICULE DE BREVET EUROPEEN

(11) **EP 2 160 526 B1**
(45) Date de publication et mention de la délivrance du brevet: **14.08.2013**
(21) Numéro de dépôt: 08806149.4
(22) Date de dépôt: 01.07.2008
(51) Int. Cl.: F16F 15/123

(54) **EMBRAYAGE A FRICTION EQUIPE D'UN PRE-AMORTISSEUR COMPORTANT DES SYSTEMES DE FROTTEMENT A HYSTERESIS ET A TIROIR DEPENDANT**
REIBUNGSKUPPLUNG MIT VORDÄMPFER EINSCHLIESSLICH HYSTERESE- UND ABHÄNGIGE SCHIEBER-REIBUNGSSYSTEMEN
FRICTION CLUTCH WITH PRE-DAMPER INCLUDING HYSTERESIS AND DEPENDENT SLIDER FRICTION SYSTEMS

(30) Priorité: 04.07.2007 FR 0756275
(43) Date de publication de la demande: 10.03.2010
(73) Titulaire: Valeo Embrayages, 80009 Amiens (FR)
(72) Inventeur: FAFET, Olivier, F-80000 Amiens (FR); MINEREAU, Hugues, F-93240 Stains (FR)
(86) Numéro de dépôt international: PCT/FR2008/051225
(87) Numéro de publication internationale: WO 2009/007643

(56) Documents cités:
- EP-A- 1 760 356
- FR-A- 2 725 256
- FR-A- 2 804 190

## Description

La présente invention concerne un embrayage à friction, en particulier pour véhicule automobile, comportant des systèmes de frottement à hystérésis et à tiroir dépendant.

Dans un véhicule automobile, un embrayage à friction a pour fonction de transmettre un couple entre un élément rotatif d'entrée et un élément rotatif de sortie, par pincement de la friction entre un plateau de pression et un volant moteur.

En général, l'élément d'entrée est formé par un disque de friction et l'élément de sortie est formé par un moyeu destiné notamment à être couplé à un arbre d'entrée de boîte de vitesses.

L'embrayage à friction a aussi pour fonction d'assurer la continuité du couple transmis et de filtrer les vibrations en provenance du moteur, notamment grâce à des moyens d'amortissement comportant des organes élastiques et des moyens de frottement associés.

La présente invention concerne plus particulièrement un embrayage à friction, notamment pour véhicule automobile, comportant :
- un amortisseur principal interposé entre un élément d'entrée, tel qu'un disque de friction, et un voile annulaire entourant un moyeu solidaire en rotation d'un arbre mené, le moyeu comportant une denture externe destinée à engrener avec un jeu circonférentiel avec une denture interne du voile, dans lequel l'amortisseur principal comporte des première et seconde rondelles principales de guidage solidaires en rotation entre elles, et un voile annulaire qui, solidaire en rotation des rondelles de guidage d'un amortisseur secondaire, est coaxial aux rondelles principales de guidage et mobile en rotation par rapport à ces rondelles principales de guidage et comportant, couplé en série avec l'amortisseur principal,
- l'amortisseur secondaire, dit pré-amortisseur, comportant les première et seconde rondelles de guidage solidaires en rotation entre elles, un voile annulaire coaxial aux rondelles de guidage et mobile en rotation par rapport aux rondelles de guidage, des moyens d'amortissement à activation immédiate et des moyens d'amortissement à activation conditionnelle qui comportent un groupe d'organes élastiques à activation conditionnelle transmettant un couple entre les rondelles de guidage et le voile annulaire, et
- un système de frottement à hystérésis variable, dit système d'hystérésis, du pré-amortisseur comportant des moyens d'hystérésis à activation conditionnelle qui, agencés entre le voile du pré-amortisseur et la première rondelle principale de guidage de l'amortisseur, comportent au moins une rondelle d'hystérésis variable comportant respectivement une face proximale de frottement et une face distale de frottement, la face distale de frottement étant destinée à coopérer avec une face de frottement portée par une rondelle élastique d'application du système d'hystérésis, la rondelle d'hystérésis variable comportant pour son activation au moins une patte d'activation qui est liée angulairement avec un organe élastique associé.

On connaît par exemple du document EP-A-1.760.356 de l'état de la technique, un tel embrayage à friction pour un véhicule automobile.

Dans un tel embrayage, le pré-amortisseur permet en particulier d'absorber les vibrations au régime de ralenti d'un moteur à combustion interne.

Le système de frottement à hystérésis variable du pré-amortisseur a démontré son efficacité quant à la filtration et l'absorption des vibrations produites par les organes élastiques correspondants.

Toutefois, quand le couple transmis par l'embrayage augmente, les organes élastiques du pré-amortisseur sont comprimés et la denture du voile vient alors, le jeu circonférentiel annulé, buter sur la denture du moyeu.

Or, les chocs entre ces dentures, parfois relativement importants, sont à l'origine de l'émission de bruits indésirables que le système de frottement à hystérésis variable seul ne parvient pas à supprimer, les frottements produits n'étant pas suffisants pour éviter les chocs entre les dentures du voile et du moyeu.

Un tel embrayage à friction ne donne donc pas entière satisfaction, en particulier du fait que subsistent des bruits indésirables provoqués par les dentures lorsqu'elles s'entrechoquent.

Il est encore à noter que les phénomènes de chocs entre les dentures à l'origine du bruit sont tout à fait différents, notamment en intensité et en énergie, des phénomènes de vibrations destinés à être filtrer et absorber par les moyens de frottement du système d'hystérésis variable.

L'invention vise notamment à résoudre les inconvénients précités de l'état de la technique, en particulier à perfectionner le pré-amortisseur d'un embrayage à friction en conservant les avantages du système d'hystérésis variable à deux étages et sans augmenter pour autant la complexité ou le coût.

Dans ce but, l'invention propose un embrayage à friction du type décrit précédemment, caractérisé en ce que le pré-amortisseur de l'embrayage à friction comporte une rondelle de frottement, dite intercalaire, qui est liée en rotation par des moyens de liaison, tels que des pattes, à la rondelle de guidage du pré-amortisseur et qui, libre axialement, est interposée entre la face proximale de frottement de la rondelle d'hystérésis variable et un système de frottement à tiroir, le système de frottement à tiroir comportant une rondelle de frottement, dite rondelle tiroir, qui est interposée axialement entre une face proximale de frottement de la rondelle intercalaire et la rondelle de guidage du pré-amortisseur et qui est soumise à une force élastique axiale la sollicitant en direction de la rondelle de guidage, la rondelle tiroir comportant des moyens d'entraînement, tels qu'une denture interne, destinés à entraîner en rotation la rondelle tiroir avec un jeu circonférentiel inférieur au jeu circonférentiel précité entre la denture externe du moyeu et la denture interne du voile de l'amortisseur de manière à réduire les bruits indésirables provoqués par les chocs entre lesdites dentures.

Avantageusement, le système à tiroir comme le système d'hystérésis sont intégrés avec le pré-amortisseur pour constituer un module pré-assemblé d'amortisseur secondaire, encore appelé "cassette pré-amortisseur", comportant en particulier deux étages d'amortissement et un système de frottement à hystérésis variable associé.

Grâce à la rondelle de frottement intercalaire qui est liée en rotation sans jeu à l'une des rondelles de guidage, chacun des systèmes de frottement, respectivement à hystérésis variable et à tiroir, est susceptible de fonctionner de manière optimale, sans interférence.

Avantageusement, le système de frottement à tiroir est du type dépendant, c'est-à-dire du type dans lequel la charge du tiroir - soit la force élastique sollicitant axialement la rondelle tiroir - est fournie par la rondelle élastique d'application du deuxième étage d'amortissement du pré-amortisseur (système d'hystérésis).

A contrario, on rappellera que le système de frottement à tiroir est du type indépendant lorsque le pré-amortisseur comporte une rondelle élastique dédiée au système à tiroir.

Suivant d'autres caractéristiques de l'invention :
- la force élastique axiale sollicitant la rondelle tiroir est développée par la rondelle élastique d'application du système d'hystérésis de manière que le système de frottement à tiroir est du type dépendant ;
- la rondelle tiroir est réalisée dans un matériau métallique, tel que de l'acier ou un matériau analogue ;
- la rondelle de frottement intercalaire, disposée axialement entre le système d'hystérésis et le système à tiroir, est réalisée dans un matériau métallique, tel que de l'acier ou un matériau analogue ;
- la rondelle de frottement intercalaire, disposée axialement entre le système d'hystérésis et le système à tiroir, est réalisée en matière plastique ;
- la rondelle d'hystérésis portant les faces distale et proximale de frottement est réalisée en un matière plastique ;
- la rondelle d'hystérésis est réalisée en un matériau métallique, tel que de l'acier, et en ce que au moins la face distale de frottement est portée par une rondelle de frottement en matière plastique qui est solidaire en rotation de la rondelle d'hystérésis ;
- la face proximale de frottement est portée par une rondelle de frottement en matière plastique qui est solidaire en rotation de la rondelle d'hystérésis, en particulier lorsque la rondelle de frottement intercalaire est réalisée en matériau métallique afin de créer un frottement de type acier/plastique ;
- la patte d'activation de la rondelle d'hystérésis comporte des surfaces de contact avec respectivement l'organe élastique à activation conditionnelle associé et le voile du pré-amortisseur, la surface de contact de la patte d'activation avec l'organe élastique comportant des moyens d'accrochage, tels qu'un ergot, destinés à coopérer avec l'organe élastique à activation conditionnelle associé afin d'accrocher la rondelle d'hystérésis sur le pré-amortisseur ;
- le moyeu est réalisé par frittage ;
- l'embrayage à friction comporte un module pré-assemblé constitué au moins par les rondelles de guidage, le voile du pré-amortisseur, les moyens d'amortissement comportant au moins un organe élastique à activation conditionnelle et la rondelle de frottement intercalaire disposée entre la rondelle tiroir et la rondelle d'hystérésis ;
- l'embrayage à friction comporte :
   - des premiers moyens de butée comportant au moins une butée angulaire déformable élastiquement qui est agencée sur l'une des rondelles de guidage formant l'élément d'entrée du pré-amortisseur et qui, lorsque ladite rondelle de guidage se déplace dans au moins l'un des sens direct ou rétrograde, est apte à amortir les chocs entre la denture externe du moyeu et la denture interne du voile de l'amortisseur, et
   - des seconds moyens de butée comportant au moins une butée angulaire rigide qui est disposée en retrait angulairement par rapport à la butée angulaire déformable élastiquement pour limiter la déformation angulaire des premiers moyens de butée et qui est constituée par au moins l'une des faces de la denture interne du voile qui forme l'élément de sortie de l'amortisseur principal.

D'autres caractéristiques et avantages de l'invention apparaîtront à la lecture de la description détaillée qui va suivre, donnée uniquement à titre d'exemple, et pour la compréhension de laquelle on se reportera aux dessins annexés dans lesquels :
- la figure 1 est une vue en coupe axiale qui représente un exemple d'un embrayage à friction comportant un module pré-amortisseur conforme aux enseignements de l'invention et qui illustre un exemple de réalisation préféré de l'invention ;
- la figure 2 est une vue en perspective éclatée de la friction d'embrayage représentée à la figure 1 ;
- la figure 3 est une vue de détail qui représente principalement le moyeu, le voile de l'amortisseur principal et la rondelle tiroir et qui illustre notamment les jeux circonférentiels entre les dentures des éléments précités ;
- la figure 4 est une vue de côté qui représente en détail le module pré-amortisseur de l'embrayage à friction selon l'exemple de réalisation de l'invention illustré notamment aux figures 1 et 2, sans la rondelle d'hystérésis ;
- la figure 5 est une vue en coupe axiale qui représente en détail le module pré-amortisseur selon la figure 4 ;
- la figure 6 est une vue en perspective avec arrachement partiel qui représente le module pré-amortisseur selon les figures 1 à 5;
- la figure 7 est une vue en perspective du module pré-amortisseur selon les figures précédentes qui représente en détail les systèmes de frottement et qui illustre respectivement, avec un éclaté partiel, la rondelle tiroir, la rondelle de frottement intercalaire et la rondelle d'hystérésis variable ;
- la figure 8 est une vue en perspective avec arrachement partiel qui représente le module pré-amortisseur et qui illustre une première variante de réalisation du système d'hystérésis dans laquelle les faces distale et proximale de frottement sont portées directement par la rondelle d'hystérésis variable qui est réalisée en matière plastique ;
- la figure 9 est une vue en perspective avec un éclaté partiel analogue à la figure 7 qui représente un module pré-amortisseur selon la première variante de réalisation du système d'hystérésis illustrée à la figure 8 ;
- la figure 10 est une vue en perspective avec arrachement partiel qui représente le module pré-amortisseur et qui illustre une deuxième variante de réalisation du système d'hystérésis dans laquelle la surface de frottement proximale est portée par la rondelle d'hystérésis variable réalisée en acier et la surface de frottement distale est portée par une rondelle de frottement qui est réalisée en matière plastique et qui est solidaire en rotation de la rondelle d'hystérésis variable en acier ;
- la figure 11 est une vue en perspective avec un éclaté partiel analogue à la figure 7 ou 9 qui représente un module pré-amortisseur selon la deuxième variante de réalisation du système d'hystérésis illustrée à la figure 10 ;
- la figure 12 est une vue en perspective éclatée analogue à la figure 2 qui représente une variante d'embrayage à friction comportant un amortisseur principal de type monopente.

Dans la description et les revendications, on utilisera à titre non limitatif les expressions telles que « externe » et « interne », « distale » et « proximale », etc. et les orientations longitudinale, verticale et transversale en référence aux définitions données dans la description et au trièdre (L, V, T) représenté sur les figures.

De plus, les éléments identiques, similaires ou analogues de l'invention seront désignés par les mêmes chiffres de référence.

Par convention, on utilisera notamment les expressions « externe » et « interne » selon la position relative des éléments par rapport à la direction radiale correspondant à l'orientation verticale, et les expressions « distale » et « proximale » selon la position relative des éléments par rapport à la direction axiale correspondant à l'orientation longitudinale, orientations définies respectivement selon le trièdre (L, V, T) représenté sur les figures.

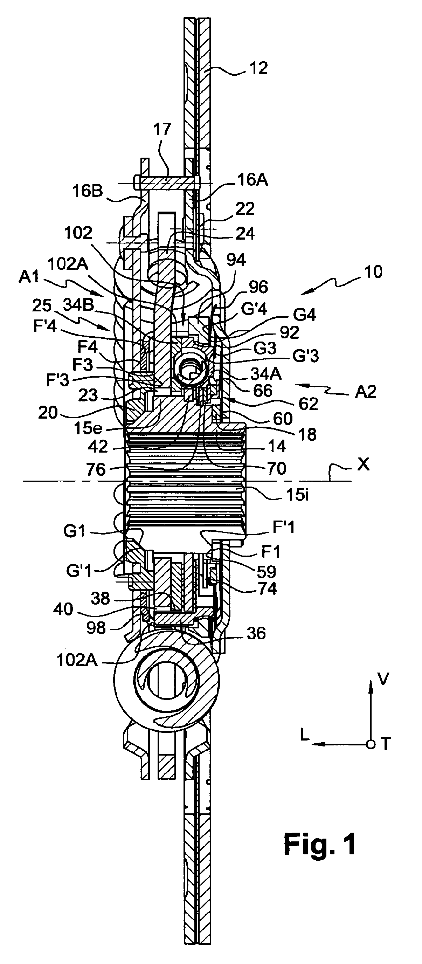

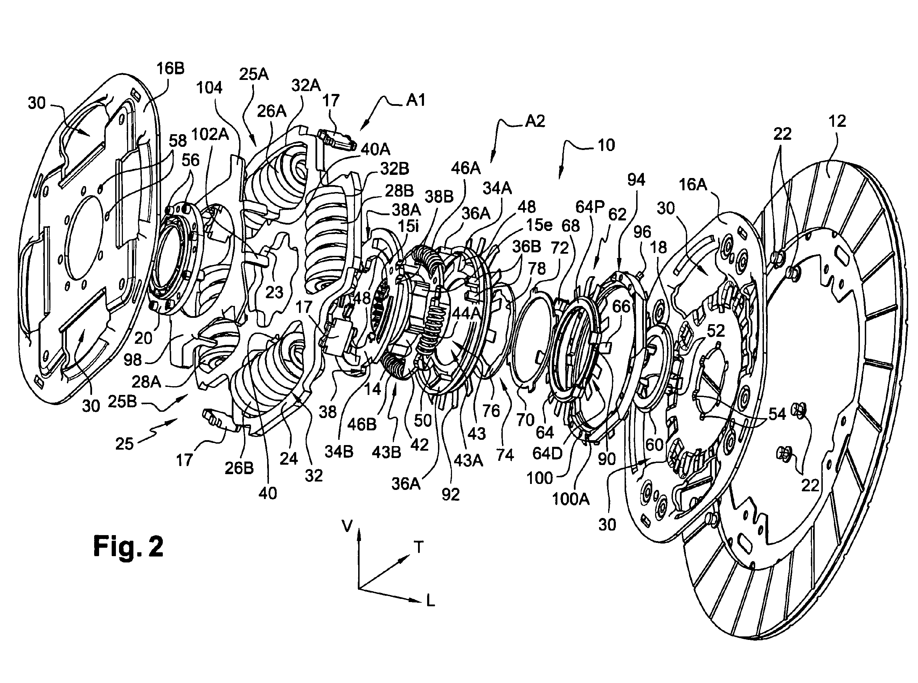

On a représenté partiellement sur les figures 1 et 2 un exemple de réalisation préféré d'un embrayage à friction 10, notamment destiné à équiper un véhicule automobile, comportant un axe principal X d'orientation longitudinale.

Bien entendu, l'embrayage à friction 10 décrit et représenté ne constitue qu'un exemple non limitatif du type d'embrayage à friction susceptible de recevoir application des enseignements de la présente invention.

De manière connue, l'embrayage à friction 10 est destiné à transmettre un couple entre un volant moteur solidaire en rotation d'un arbre menant, tel que le vilebrequin d'un moteur à combustion interne, et un arbre mené tel que l'arbre d'entrée d'une boîte de vitesses.

De préférence, l'embrayage à friction 10 est muni de moyens d'amortissement comportant un amortisseur principal A1 et un amortisseur secondaire A2, généralement appelé pré-amortisseur. Ces amortisseurs A1, A2 sont couplés en série entre un élément rotatif d'entrée générale, tel qu'un disque de friction 12, et un élément rotatif de sortie générale, tel qu'un moyeu interne 14, de forme générale annulaire, ces éléments d'entrée et de sortie étant sensiblement coaxiaux.

Le disque de friction 12 est destiné à être serré entre le volant moteur et un plateau de pression actionné par des moyens embrayeurs. Le moyeu 14 comprend des cannelures longitudinales internes 15i permettant de le solidariser en rotation avec une extrémité de l'arbre mené (non représenté).

Chaque amortisseur A1, A2 est muni d'éléments rotatifs d'entrée et de sortie, un couple entrant par l'élément d'entrée étant transmis à l'élément de sortie après amortissement.

L'élément d'entrée de l'amortisseur principal A1 est l'élément d'entrée générale de l'embrayage à friction 10, c'est à dire le disque de friction 12.

L'amortisseur principal A1 comprend des première 16A et seconde 16B rondelles de guidage, solidarisées en rotation entre elles à l'aide de moyens conventionnels 17, tels que des colonnettes.

Ces rondelles de guidage 16A, 16B sont montées en rotation sur le moyeu 14 au moyen de paliers annulaires 18, 20 respectivement. Le disque de friction 12 est fixé sur la première rondelle de guidage 16A au moyen de rivets 22.

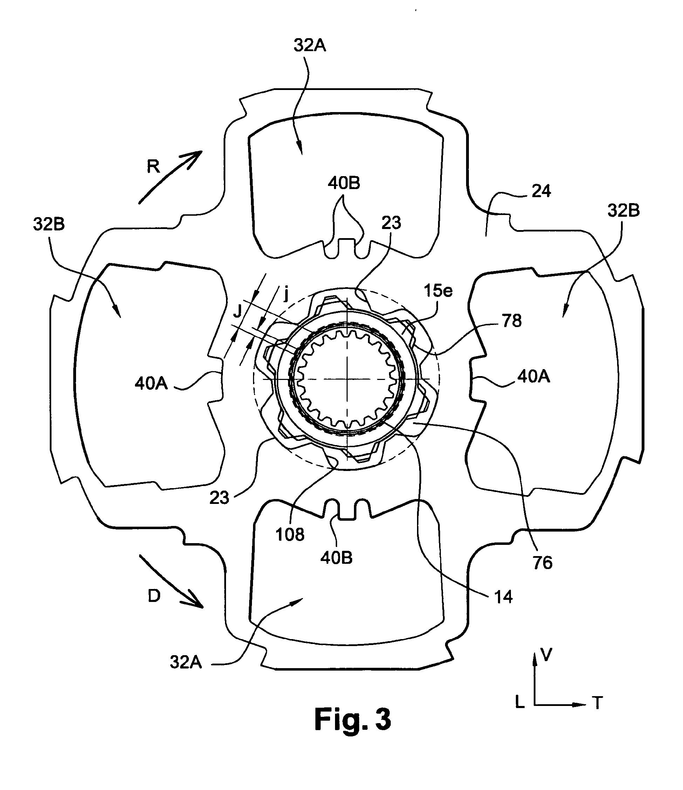

Un voile annulaire 24 est intercalé axialement entre les deux rondelles de guidage 16A, 16B, co-axialement à celles-ci. Ce voile annulaire 24 comporte, en périphérie interne, une denture 23 qui engrène, avec un jeu circonférentiel J déterminé (figure 3), avec une denture correspondante 15e de la périphérie externe du moyeu 14. La denture interne 23 du voile 24 forme des saillies sensiblement radiales destinées à coopérer avec des évidements complémentaires externes du moyeu 14 de manière à réaliser un engrènement.

L'amortisseur principal A1 comporte également des moyens d'amortissement 25 destinés à amortir des vibrations en provenance du moteur.

De préférence, les moyens d'amortissement 25 comportent d'une part des moyens 25A d'amortissement à activation, dite immédiate, qui sont activés dès que débute le débattement angulaire entre les rondelles de guidage 16A, 16B et le voile 24, et, d'autre part, des moyens 25B d'amortissement à activation, dite conditionnelle, qui sont activés ici lorsque le débattement angulaire entre les rondelles de guidage 16A, 16B et le voile annulaire 24 dépasse un angle seuil prédéterminé à partir d'une position de repos, dit angle seuil d'amortisseur principal A1.

Les moyens d'amortissement 25A, 25B comportent des organes élastiques à action circonférentielle, tels que des ressorts hélicoïdaux 26A, 26B, 28A, 28B de forte raideur, logés dans des fenêtres 30 des rondelles de guidage 16A, 16B et dans des fenêtres 32A et 32B du voile annulaire 24. Les organes élastiques 26A, 26B, 28A, 28B sont répartis en deux groupes.

Les moyens d'amortissement à activation immédiate 25A comportent des organes élastiques 26A, 26B d'un premier groupe, dits organes élastiques à activation immédiate, logés sans jeu circonférentiel dans les fenêtres 30 des rondelles de guidage 16A, 16B et dans les fenêtres 32A du voile annulaire 24. Ils participent à la transmission d'un couple de rotation entre les rondelles de guidage 16A, 16B et le voile 24 dès le début d'une rotation relative entre le disque de friction 12 fixé sur la première rondelle de guidage 16A de l'amortisseur A1 et le moyeu 14.

Les moyens d'amortissement à activation conditionnelle 25B comportent des organes élastiques 28A, 28B d'un second groupe, dits organes élastiques à activation conditionnelle, logés sans jeu circonférentiel dans les fenêtres 30 des rondelles de guidage 16A, 16B et avec un jeu circonférentiel prédéterminé dans les fenêtres 32B du voile annulaire 24.

Les organes élastiques 28A, 28B du second groupe sont ici activés de façon décalée pour assurer la transmission d'un couple de rotation que lorsque le débattement angulaire entre les rondelles de guidage 16A, 16B et le voile annulaire 24 dépasse l'angle seuil d'amortisseur principal A1.

On notera que cet angle seuil d'amortisseur principal A1 correspond au jeu circonférentiel entre les organes élastiques 28A, 28B et les fenêtres 32A, 32B du voile 24.

Ainsi les organes élastiques 26A, 26B du premier groupe sont activés de façon immédiate pour transmettre le couple en permanence, tandis que les organes élastiques 28A, 28B du second groupe sont activés de façon conditionnelle pour transmettre le couple uniquement lorsque le débattement angulaire entre les rondelles de guidage 16A, 16B et le voile annulaire 24 est, ici, supérieur à l'angle seuil d'amortisseur principal A1.

Le pré-amortisseur A2 relie le voile annulaire 24 de l'amortisseur principal A1 et le moyeu 14.

Le pré-amortisseur A2 comprend des première 34A et seconde 34B rondelles de guidage. Ces rondelles de guidage 34A, 34B sont solidarisées en rotation avec le voile 24 et accrochées sur ce voile 24 à l'aide de pattes axiales 36 ménagées à la périphérie de la première rondelle de guidage 34A.

Avantageusement, la rondelle de guidage 34A comporte deux types de pattes axiales 36, respectivement une première paire de pattes 36A et une seconde paire de pattes 36B, qui constituent des moyens détrompeurs destinés à garantir, lors du montage, un positionnement correct du moyeu 14 par rapport au voile principal 24.

En effet, les pattes 36A et 36B sont emboîtées dans des encoches complémentaires 38A, 38B et 40A, 40B qui, destinées à permettre la solidarisation en rotation, sont ménagées respectivement sur les contours de la seconde rondelle de guidage 34B et des fenêtres 32 du voile 24.

Par ailleurs, les extrémités libres des pattes 36A et 36B coopèrent de préférence par encliquetage avec les contours des fenêtres 32 pour solidariser axialement les première 34A et seconde 34B rondelles de guidage au voile 24 de l'amortisseur principal A1.

De préférence, chaque patte 36A de la première paire est réalisée sous la forme d'une seule patte dite "large" tandis que chaque patte 36B de la seconde paire est réalisée sous la forme d'une patte dite "double" de sorte que chacune des encoches 38 et 40 présente un profil complémentaire qui est différent selon que ladite encoche est destinée à être associée à une patte 36A de la première paire ou à une patte 36B de la deuxième paire.

Comme le voir sur la figure 2 et plus particulièrement sur la figure 3 pour le voile principal 24, les encoches 38A de la rondelle de guidage 34B et les encoches 40A du voile 24 qui sont respectivement associées aux pattes larges 36A présentent un profil complémentaire en "U" tandis que les encoches 38B de la rondelle de guidage 34B et les encoches 40B du voile 24 qui sont respectivement associées aux pattes doubles 36B présentent un profil complémentaire en "W".

Il n'est ainsi pas possible à une patte large 36A d'être introduite dans une encoche 38B ou 40B en "W", elle ne peut l'être que dans une encoche 38A, 40A associée ce qui assure la fonction de détrompeur.

Dans le mode de réalisation représenté, les rondelles de guidage 34A, 34B sont de préférence réalisées en matière plastique, laquelle est éventuellement renforcée de fibres.

Un voile annulaire 42 de pré-amortisseur est intercalé axialement entre les deux rondelles de guidage 34A, 34B, co-axialement à celles-ci. Ce voile annulaire 42 est solidaire en rotation du moyeu 14, par exemple par engrènement sans jeu avec la denture périphérique externe 15e de ce moyeu 14.

On notera que les pattes 36 coopérant avec les encoches 38, 40 enjambent le voile 42 sans gêner le mouvement relatif entre les rondelles de guidage 34A, 34B et le voile 42.

Le pré-amortisseur A2 comporte également des moyens d'amortissement 43 destinés à amortir des vibrations en provenance du moteur.

Les moyens d'amortissement 43 du pré-amortisseur A2 comportent d'une part des moyens 43A d'amortissement à activation, dite immédiate, qui sont activés dès que débute le débattement angulaire entre les rondelles de guidage 34A, 34B et le voile 42 du pré-amortisseur A2, et, d'autre part, des moyens 43B d'amortissement à activation, dite conditionnelle, qui sont activés, ici, lorsque le débattement angulaire entre les rondelles de guidage 34A, 34B et le voile annulaire 42 du pré-amortisseur A2 dépasse un angle seuil prédéterminé à partir d'une position de repos, dit angle seuil de pré-amortisseur A2.

Les moyens d'amortissement 43A, 43B comportent des organes élastiques à action circonférentielle, tels que des ressorts hélicoïdaux 44A, 44B, 46A, 46B de raideur relativement faible, logés dans des fenêtres 48 des rondelles de guidage 34A, 34B et dans des fenêtres 50 du voile annulaire 42. De façon analogue à l'amortisseur principal A1, les organes élastiques 44A, 44B, 46A, 46B sont répartis en deux groupes.

Les moyens d'amortissement à activation immédiate 43A comportent des organes élastiques 44A, 44B d'un premier groupe, dits organes élastiques à activation immédiate, logés sans jeu circonférentiel dans les fenêtres 48, 50. Ils participent à la transmission d'un couple de rotation entre les rondelles de guidage 34A, 34B et le voile 42, dès le début d'une rotation relative entre ces rondelles de guidage 34A, 34B et ce voile 42.

Les moyens d'amortissement à activation conditionnelle 43B comportent des organes élastiques 46A, 46B d'un second groupe, dits organes élastiques à activation conditionnelle, logés sans jeu circonférentiel dans les fenêtres 48 des rondelles de guidage 34A, 34B et avec un jeu circonférentiel prédéterminé dans les fenêtres 50 du voile annulaire 42.

Les organes élastiques 46A, 46B du second groupe sont activés de façon conditionnelle pour assurer la transmission d'un couple de rotation uniquement lorsque le débattement angulaire entre les rondelles de guidage 34A, 34B et le voile annulaire 42 du pré-amortisseur A2 dépasse l'angle seuil de pré-amortisseur A2.

On notera que cet angle seuil de pré-amortisseur A2 correspond au jeu circonférentiel entre les organes élastiques 46A, 46B du second groupe et les fenêtres 50 correspondantes du voile 42.

Ainsi, les organes élastiques 44A, 44B du premier groupe sont activés de façon immédiate pour transmettre le couple en permanence, tandis que les organes élastiques 46A, 46B du second groupe sont activés de façon décalée pour transmettre le couple uniquement lorsque le débattement angulaire entre les rondelles de guidage 34A, 34B et le voile annulaire 42 est supérieur à l'angle seuil de pré-amortisseur A2.

Avantageusement, l'ensemble des organes élastiques 26A, 26B, 28A, 28B, 44A, 44B, 46A, 46B de l'amortisseur principal A1 et du pré-amortisseur A2 permet donc d'obtenir quatre étages d'amortissement des vibrations et des irrégularités de couple.

En effet, les organes élastiques 44A, 44B, 46A, 46B du pré-amortisseur A2 déterminent des premier et deuxième étages d'amortissement selon qu'ils sont montés sans ou avec jeu circonférentiel dans leurs fenêtres correspondantes.

Par ailleurs, en fin de course du pré-amortisseur A2, les organes élastiques 26A, 26B, 28A, 28B de l'amortisseur principal A1 déterminent des troisième et quatrième étages d'amortissement selon qu'ils sont montés sans ou avec jeu circonférentiel dans leurs fenêtres correspondantes.

A chaque étage d'amortissement sont associés des moyens de frottement, dits d'hystérésis, qui sont destinés à dissiper l'énergie accumulée dans chacun des organes élastiques 26A, 26B, 28A, 28B de l'amortisseur principal A1 et dans chacun des organes élastiques 44A, 44B, 46A, 46B du pré-amortisseur A2, de manière a assurer une fonction de filtration des vibrations en évitant par exemple des phénomènes, tels que le "creeping".

Ainsi, le pré-amortisseur A2 comporte respectivement des premiers et deuxièmes moyens d'hystérésis, et l'amortisseur A1 principal comporte respectivement des troisièmes et quatrièmes moyens d'hystérésis.

Les premiers moyens d'hystérésis associés au pré-amortisseur A2 comprennent des surfaces de frottement portées par le moyeu 14 et les paliers 18, 20.

Le palier 18 est solidarisé en rotation avec la première rondelle de guidage 16A de l'amortisseur principal A1 à l'aide de moyens classiques, par exemple des doigts axiaux 52 coopérant par encliquetage avec un contour interne cranté complémentaire 54 de la rondelle de guidage 16A.

Le palier 20, participant au centrage de la seconde rondelle de guidage 16B de l'amortisseur principal A1, est solidarisé en rotation avec cette rondelle de guidage 16B à l'aide de moyens classiques, par exemple des doigts axiaux 56 emboîtés dans des orifices complémentaires 58 de la rondelle de guidage 16B.

Deux surfaces de frottement complémentaires radiales F1, F1' sont portées respectivement par le palier 18 et un épaulement 59 du moyeu 14.

Deux surfaces de frottement complémentaires tronconiques G1, G1' sont portées respectivement par le palier 20 et le moyeu 14.

Les surfaces de frottement complémentaires F1, F1', G1, G1' sont sollicitées élastiquement en contact mutuel par une rondelle élastique 60 de compression axiale en appui entre la première rondelle de guidage 16A de l'amortisseur principal A1 et le palier 18.

La rondelle élastique 60, de préférence en acier à ressort, est solidarisée en rotation avec la première rondelle de guidage 16A de l'amortisseur principal A1 à l'aide de moyens classiques, par exemple par coopération de pattes et encoches complémentaires.

Dans le mode de réalisation représenté, les paliers 18 et 20 sont en matière plastique, éventuellement renforcée de fibres, et exercent de préférence un frottement relativement « doux » sur le moyeu 14.

Les deuxièmes moyens d'hystérésis associés au pré-amortisseur A2 sont activés de façon décalée par rapport aux premiers moyens d'hystérésis.

Ces deuxièmes moyens d'hystérésis forment un système de frottement à hystérésis variable 62, dit système d'hystérésis.

Avantageusement, le système d'hystérésis 62 du pré-amortisseur A2 comporte des moyens d'hystérésis à activation conditionnelle qui sont agencés entre le voile 42 du pré-amortisseur A2 et la première rondelle principale de guidage 16A de l'amortisseur A1, plus précisément entre la première rondelle de guidage 34A du pré-amortisseur A2 et la première rondelle principale de guidage 16A.

Dans la description qui suit des faces ou surfaces de frottement, une face ou une surface est dite « proximale » lorsqu'elle est orientée vers du voile 24 et, à contrario, est dite « distale » lorsque elle est orientée à l'opposé vers la rondelle de guidage 16A.

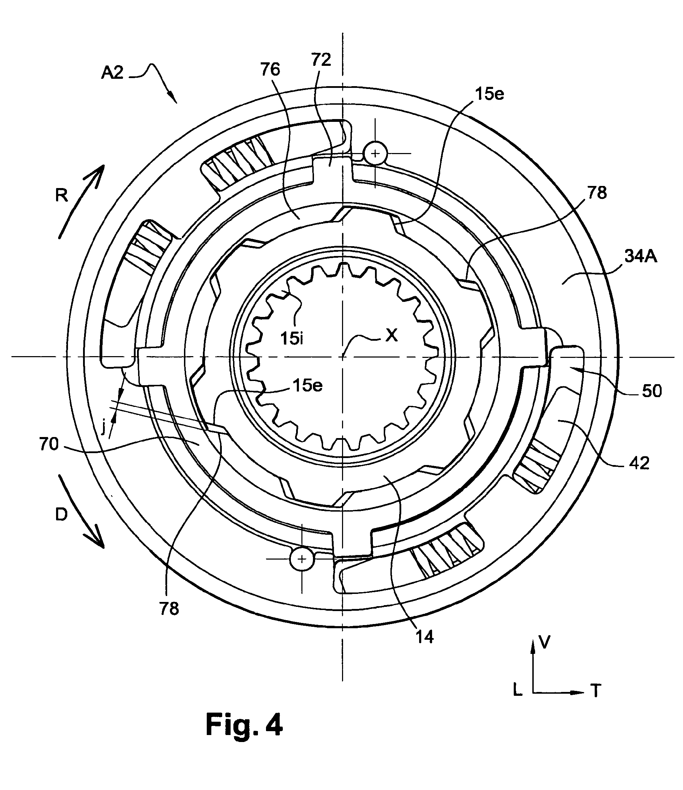

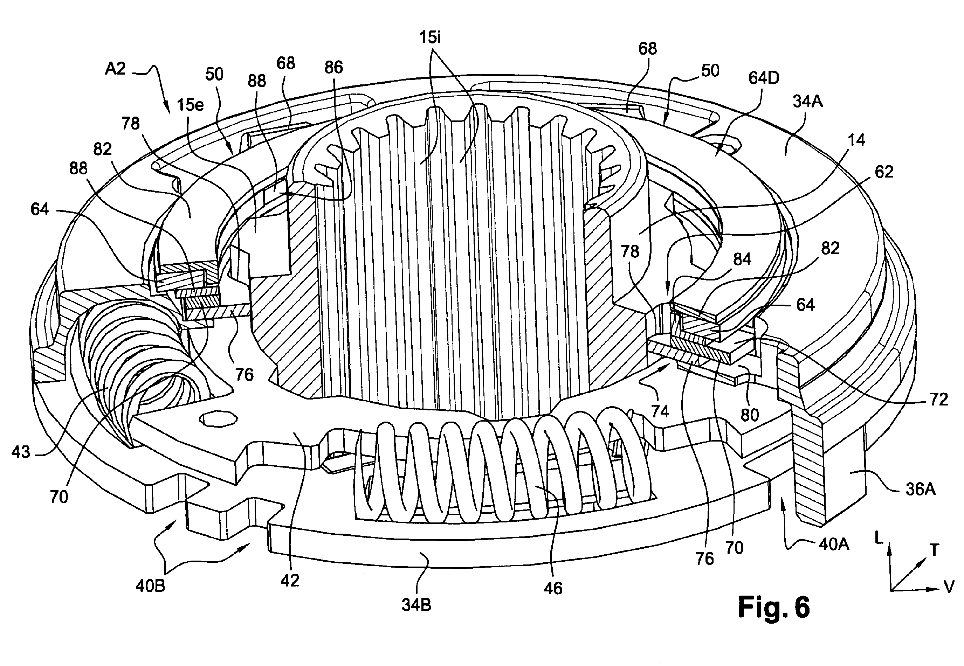

On décrira plus particulièrement ci-après, selon l'exemple de réalisation préféré représenté sur les figures 1 et 2, le pré-amortisseur A2 notamment détaillé aux figures 4 à 7.

Les moyens d'hystérésis à activation conditionnelle du système 62 comportent au moins une rondelle d'hystérésis variable 64 et une rondelle élastique d'application 66.

La rondelle d'hystérésis 64 comporte respectivement une face proximale 64P formant une surface de frottement et une face distale 64D formant une autre surface de frottement, la face distale de frottement 64D étant destinée à coopérer avec une surface de frottement complémentaire formée par une face 66P qui est portée par la rondelle élastique d'application 66 du système d'hystérésis 62.

Avantageusement, la rondelle d'hystérésis variable 64 comporte pour son activation au moins une patte d'activation 68 qui est liée angulairement avec un organe élastique 46A, 46B correspondant et qui sera décrite plus détail ultérieurement.

Conformément à l'invention, l'embrayage à friction 10 comporte une rondelle de frottement 70, dite rondelle intercalaire, qui est liée en rotation par des moyens de liaison 72, tels que des pattes, à la rondelle de guidage 34A du pré-amortisseur A2 et qui, libre axialement, est interposée entre la face proximale de frottement 64P de la rondelle d'hystérésis variable 64 et un système de frottement à tiroir 74.

Selon l'invention, le système de frottement à tiroir 74 comporte une rondelle de frottement 76, dite rondelle tiroir, qui est interposée axialement entre une face proximale 70P de la rondelle intercalaire 70 formant une surface de frottement et la rondelle de guidage 34A du pré-amortisseur A2 comportant aussi une surface de frottement associée.

Avantageusement, la rondelle tiroir 76 de frottement est soumise à une force élastique axiale qui la sollicite en direction de la rondelle de guidage 34A.

La rondelle tiroir 76 comporte des moyens d'entraînement en rotation ou d'engrènement 78 destinés à permettre l'entraînement en rotation de la rondelle tiroir 76 avec un débattement piloté ou jeu circonférentiel donné.

Selon une variante non représentée, les moyens d'entraînement en rotation de la rondelle tiroir 76 sont constitués par des pattes axiales solidaires de la rondelle 76 et avantageusement venues de matière, lesdites pattes d'entraînement en rotation étant indexées angulairement et coopérant avec des encoches complémentaires réalisées dans le voile 42 du pré-amortisseur.

Toutefois, la réalisation de telles encoches dans le voile de pré-amortisseur pour l'engrènement des pattes de la rondelle tiroir 76 est susceptible d'affecter la résistance mécanique du voile 42 de pré-amortisseur.

Dans l'exemple de réalisation préféré selon l'invention, les moyens d'entraînement en rotation de la rondelle tiroir 76 sont donc de préférence constitués par une denture interne 78.

La denture interne 78 est apte à engrener avec la denture externe 15e du moyeu 14 avec un jeu circonférentiel « j » prédéterminé qui est inférieur au jeu circonférentiel « J » précité entre la denture externe 15e du moyeu 14 et la denture interne 23 du voile 24 de l'amortisseur A1.

Avantageusement, le système de frottement à tiroir 74 est apte à réduire les bruits indésirables provoqués par les chocs entre lesdites dentures 15e et 23.

Grâce à l'agencement selon l'invention, il est possible de juxtaposer axialement avec le pré-amortisseur A2, un système de frottement à hystérésis variable 62 et un système de frottement à tiroir 74 qui forment avantageusement un module pré-assemblé ainsi que cela sera décrit ultérieurement.

Avantageusement, le pré-amortisseur A2, le système de frottement à hystérésis variable 62 et le système de frottement à tiroir 74 sont ainsi intégrés dans l'embrayage à friction 10 avec un encombrement axial optimal.

La force élastique axiale sollicitant la rondelle tiroir 76 est ici développée par la rondelle élastique d'application 66 du système d'hystérésis 62, le système de frottement à tiroir 74 est donc un système à tiroir dit "dépendant".

Par définition, un système à tiroir est de type "dépendant" lorsque la rondelle élastique ne lui est pas dédiée, contrairement au système à tiroir dit "indépendant" dans lequel la force élastique axiale sollicitant la rondelle tiroir est développée par une rondelle élastique spécifique et associée exclusivement à la rondelle tiroir, voire constituant directement la rondelle tiroir de frottement.

Avantageusement, la suppression, dans un système à tiroir dépendant, d'une telle rondelle élastique dédiée à la rondelle tiroir participe encore à la réduction du coût et de l'encombrement axial général de l'embrayage à friction et du module de pré-amortisseur.

De préférence, la rondelle élastique d'application 66, la rondelle d'hystérésis 64 du système de frottement à hystérésis variable 62, la rondelle intercalaire 70 et la rondelle tiroir 76 du système de frottement à tiroir 74 sont globalement alignées suivant la direction axiale, c'est-à-dire sensiblement équidistante radialement de l'axe principal X.

La rondelle tiroir 76 comporte deux surfaces annulaires verticales de frottement formant respectivement une face proximale 76P de frottement et, à l'opposé axialement, une face distale 76D de frottement.

Pour le système d'hystérésis 62, les surfaces de frottement sont portées, d'une part, par la face proximale 64P de la rondelle d'hystérésis 64 associée à une face distale 70D formant une surface de frottement que comporte la rondelle intercalaire 70 et, d'autre part, par la face distale 64D de la rondelle d'hystérésis 64 associée à la face 66P de la rondelle élastique d'application 66.

Pour le système à tiroir 74, les surfaces de frottement sont respectivement portées par la face proximale de frottement 76P de la rondelle tiroir 76 associée à une face ou surface de frottement 80 que comporte la rondelle de guidage 34A du pré-amortisseur A2 et la face distale de frottement 76D de la rondelle tiroir 76 associée à une face proximale 70P formant une surface de frottement que comporte la rondelle intercalaire 70.

Avantageusement, on détermine en fonction de l'application les matériaux appropriés à mettre en oeuvre pour la fabrication des différents éléments ou rondelles portant au moins une surface de frottement.

De préférence, les matériaux sont principalement choisis parmi des matériaux métalliques, tels qu'une tôle en acier, et des matières plastiques, renforcées ou non par des fibres, de manière à obtenir, pour chaque système de frottement 62, 74, le type de frottement approprié.

On distingue par conséquent, en fonction des matériaux, différentes combinaisons ou types de frottement tels que par exemple acier/acier, acier/plastique, etc.

Dans l'exemple de réalisation des figures 4 à 7, on rappellera que la rondelle de guidage 34A est de préférence réalisée en matière plastique, éventuellement renforcée de fibres.

De préférence, la rondelle élastique d'application 66 est métallique, par exemple réalisée en acier à ressort, et exerce un effort de compression axiale sur les systèmes de frottement 62 et 74, dont les rondelles sont coaxiales et juxtaposées axialement.

De préférence, la rondelle tiroir 76 est réalisée dans un matériau métallique, tel que de l'acier ou un matériau analogue.

La rondelle de frottement intercalaire 70 qui est disposée axialement entre le système d'hystérésis 62 et le système à tiroir 74, est aussi réalisée dans un matériau métallique, tel que de l'acier ou un matériau analogue.

Par conséquent, la rondelle tiroir 76 présente du côté de sa face proximale 76P associée à la rondelle de guidage 34A un frottement de type plastique/acier tandis qu'elle présente du côté opposé de sa face distale 76D un frottement de type acier/acier avec la face 70P de la rondelle intercalaire 70.

Selon l'exemple de réalisation, la rondelle d'hystérésis variable 64 est réalisée en un matériau métallique, tel que de l'acier ou un matériau analogue, sur chacune des faces annulaires de laquelle sont rapportées de manière solidaire une rondelle de frottement, respectivement une première rondelle de frottement 82 et une deuxième rondelle de frottement 84.

Avantageusement, la première rondelle de frottement 82 et la deuxième rondelle de frottement 84 sont fabriquées en matière plastique.

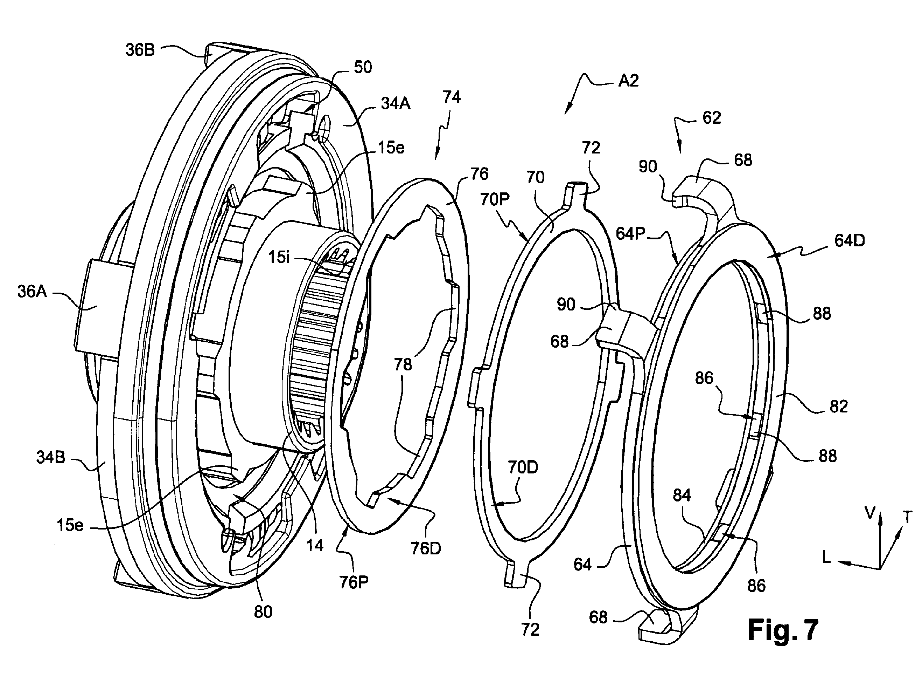

Ainsi et comme illustré par exemple à la figure 7, la face distale 64D formant la surface de frottement est portée par la première rondelle de frottement 82 en matière plastique qui est solidaire en rotation de la rondelle d'hystérésis 64.

De même, la face proximale 64P de frottement est portée par la seconde rondelle de frottement 84 qui, en matière plastique, est solidaire en rotation de la rondelle d'hystérésis 64.

De préférence, la rondelle d'hystérésis variable 64 présente du côté de sa face proximale 64P associée à la rondelle intercalaire 70 un frottement de type plastique/acier tandis qu'elle présente du côté opposé de sa face distale 64D un frottement de type plastique/acier avec la face 66P de la rondelle élastique 66.

Avantageusement, les rondelles de frottement 82, 84 sont solidarisées en rotation avec la rondelle d'hystérésis variable 64 à l'aide de moyens appropriés tels que par collage ou par coopération de formes.

De préférence, la rondelle d'hystérésis 64 comporte des encoches 86, ménagées sur un contour interne de la rondelle en acier, dans lesquelles sont emboîtées des ergots 88 complémentaires qui, faisant saillie axialement, sont ménagées sur un contour interne de la première 82 et de la deuxième 84 rondelles de frottement en plastique.

Le système d'hystérésis 62 comportant les rondelles 64, 82 et 84, est intercalé axialement entre la rondelle intercalaire 70 et sa rondelle élastique d'application 66.

Avantageusement, la rondelle d'hystérésis 64 est munie également, à sa périphérie externe, de deux paires de pattes 68 d'activation de cette rondelle 64. Les pattes d'activation 68 d'une même paire étant en prise avec une paire d'extrémités d'un organe élastique 46A, 46B correspondant lorsque celui-ci est au repos.

Lorsque le deuxième étage d'amortissement associé au pré-amortisseur A2 est activé, le jeu circonférentiel entre chaque organe élastique 46A, 46B et le contour d'une fenêtre 50 correspondante du voile 42 est annulé, si bien que le voile 42 vient en appui contre une des extrémités de l'organe élastique 46A, 46B pour comprimer cet organe élastique 46A, 46B.

Ainsi, la patte d'activation 68, en contact avec l'extrémité de l'organe élastique 46A, 46B coopérant avec le voile 42, se déplace conjointement avec cette extrémité et le voile 42 pour entraîner en rotation la rondelle d'hystérésis 64 en acier et donc de la première 82 et de la deuxième 84 rondelles de frottement en plastique.

Deux surfaces de frottement complémentaires radiales F2, F2' sont portées respectivement par la rondelle intercalaire de frottement 70 et la rondelle d'hystérésis 64, plus précisément ici la deuxième rondelle de frottement 84, de façon à créer un frottement de type plastique/acier.

Deux surfaces de frottement complémentaires radiales G2, G2' sont portées respectivement par la rondelle élastique 66 et la première rondelle de frottement 82 en plastique de la rondelle d'hystérésis 64 de façon à créer un frottement de type plastique/acier.

Avantageusement, lorsque la rondelle intercalaire de frottement 70 comme la rondelle élastique 66 sont réalisées en matériau métallique, on crée alors un frottement de type acier/plastique de chaque côté de la rondelle d'hystérésis variable 64.

Les surfaces de frottement complémentaires F2, F2', G2, G2' sont sollicitées élastiquement en contact mutuel par la rondelle élastique 66.

En effet, la rondelle élastique d'application 66 est montée en appui entre la première rondelle de guidage 16A de l'amortisseur principal A1 et la rondelle d'hystérésis variable 64, plus particulièrement la première rondelle de frottement 82.

De préférence, la rondelle élastique 66 est solidarisée en rotation avec la rondelle de guidage 16A de l'amortisseur principal A1 à l'aide de moyens classiques, par exemple par coopération de formes entre pattes radiales et des encoches complémentaires.

Avantageusement, chaque patte 68 est venue de matière avec la rondelle 64 et est délimitée par des surfaces de contact avec l'organe élastique 46A, 46B correspondant et le voile 42 formées par la tranche de cette rondelle 64 en tôle.

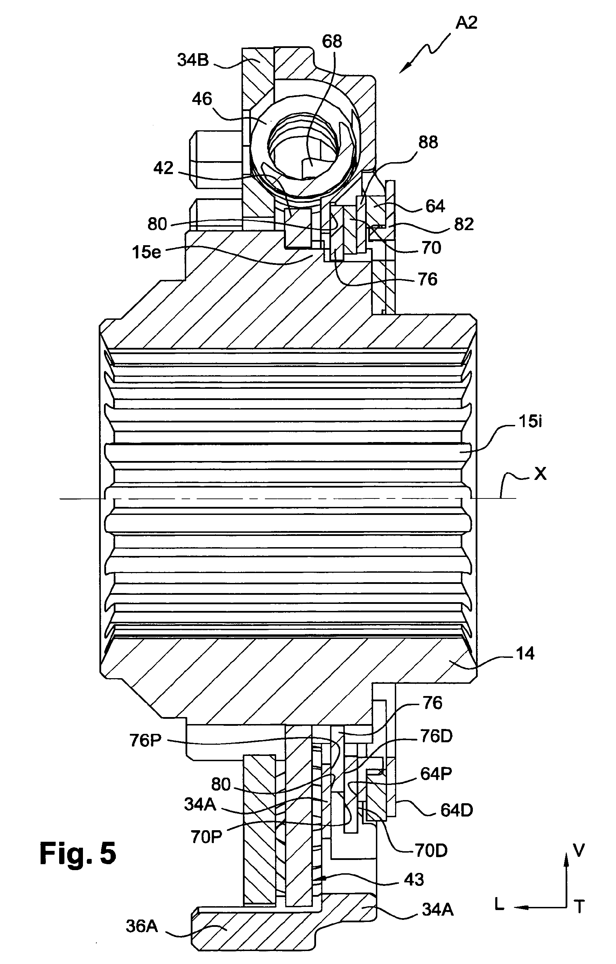

En outre, chaque patte 68 est repliée axialement de façon à traverser la première rondelle de guidage 34A du pré-amortisseur A2 (voir figure 5). En variante, les pattes 68 pourraient enjamber la première rondelle de guidage 34A du pré-amortisseur A2.

Avantageusement, la surface de contact avec l'organe élastique 46A, 46B de chaque patte d'activation 68 comprend des moyens d'encliquetage 90 destinés à coopérer avec un organe élastique à activation conditionnelle 46A, 46B correspondant afin d'accrocher la rondelle d'hystérésis 64 sur le pré-amortisseur A2.

De préférence, les moyens d'encliquetage comportent un ergot 90 qui, venu de matière avec la patte d'activation 68, est destiné à coopérer avec une extrémité de l'organe élastique à activation conditionnelle 46A, 46B correspondant.

Tel qu'illustré à la figure 7, l'ergot 90 est disposé à une extrémité libre de la patte d'activation 68. En variante, l'ergot 90 est globalement centré, c'est-à-dire disposé entre ladite extrémité libre et une extrémité de liaison qui, opposée axialement, assure la liaison de la patte 68 avec la partie annulaire de la rondelle d'hystérésis 64.

Les troisièmes moyens d'hystérésis associés à l'amortisseur principal A1 comprennent des surfaces de frottement portées par le palier 20, le voile 24 de l'amortisseur principal A1, la première rondelle de guidage 34A du pré-amortisseur A2 et une rondelle élastique 92 de compression axiale, de préférence en acier à ressort.

Comme illustré sur les figures 1 et 2, deux surfaces de frottement complémentaires radiales F3, F3' sont portées respectivement par le palier 20 et le voile 24 de l'amortisseur principal A1. Comme déjà précisé ci-dessus, le palier 20 est solidaire en rotation de la rondelle de guidage 16B.

On notera que le palier 20 est un organe de frottement commun aux moyens d'hystérésis 62 à activation immédiate du pré-amortisseur A2 (premier étage) et aux moyens d'hystérésis à activation immédiate de l'amortisseur principal A1 (troisième étage).

Deux surfaces de frottement complémentaires radiales G3, G3' sont portées respectivement par la rondelle de guidage 34A du pré-amortisseur A2 et la rondelle élastique 92.

Les surfaces de frottement complémentaires F3, F3', G3, G3' sont sollicitées élastiquement en contact mutuel par la rondelle élastique 92. En effet, la rondelle élastique 92 est montée en appui entre la première rondelle de guidage 16A de l'amortisseur principal A1 et la première rondelle de guidage 34A du pré-amortisseur A2.

La rondelle élastique 92 est solidarisée en rotation avec la rondelle de guidage 16A de l'amortisseur principal A1 à l'aide de moyens classiques, par exemple par coopération de pattes radiales et encoches complémentaires.

Les quatrièmes moyens d'hystérésis associés à l'amortisseur principal A1 sont activés de façon conditionnelle par rapport aux troisièmes moyens d'hystérésis.

Comme illustré sur les figures 1 et 2, ces quatrièmes moyens d'hystérésis comprennent des surfaces de frottement portées par la seconde rondelle de guidage 16B de l'amortisseur principal A1, un organe de frottement 94 et une rondelle élastique 96 de compression axiale, de préférence en acier à ressort.

L'organe de frottement 94 comprend des première 98 et seconde 100 rondelles de frottement coaxiales, sensiblement planes, fabriquées respectivement en tôle métallique et en matière plastique.

La première rondelle de frottement 98 est intercalée axialement entre la seconde rondelle de guidage 16B et le voile annulaire 24 de l'amortisseur principal A1, et entoure le palier 20. La seconde rondelle de frottement 100 est intercalée axialement entre le voile annulaire 24 de l'amortisseur principal A1 et la rondelle élastique 96, et entoure la première rondelle de guidage 34A du pré-amortisseur A2.

On notera que des moyens d'entretoisement 102 sont agencés entre la première rondelle de frottement 98 et la seconde rondelle de frottement 100. Ces moyens d'entretoisement 102 ménagent un dégagement axial entre deux faces en vis à vis de la première rondelle de frottement 98 et du voile 24 de l'amortisseur principal A1. Ainsi, la première rondelle de frottement 98 comporte une surface libre en regard du voile 24, qui n'est sujette à aucun frottement.

La première rondelle de frottement 98 ne subit alors des frottements qu'avec la rondelle de guidage 16B, et uniquement lorsque les moyens d'amortissement 25B à activation conditionnelle de l'amortisseur principal A1 sont activés.

De préférence, les moyens d'entretoisement 102 comportent des pattes axiales d'entretoisement 102A, venues de matière avec la première rondelle de frottement 98, et munies chacune d'une extrémité de liaison avec la première rondelle de frottement 98 et d'une extrémité libre de coopération avec la seconde rondelle de frottement 100.

Les rondelles de frottement 98, 100 sont solidarisées en rotation l'une avec l'autre à l'aide des pattes axiales d'entretoisement 102A. En effet, l'extrémité libre de coopération de chacune de ces pattes d'entretoisement 102A est emboîtée dans un orifice complémentaire 100A, ménagé dans la seconde rondelle de frottement 100.

La première rondelle de frottement 98 comporte par exemple huit pattes d'entretoisement 102A disposées circonférentiellement de manière régulière sur tout le contour de cette première rondelle de frottement 98 afin d'optimiser la solidarisation en rotation des rondelles de frottement 98, 100.

On notera que les pattes d'entretoisement 102A enjambent le voile 24 sans gêner le mouvement relatif entre les rondelles de guidage 16A, 16B et le voile 24.

La première rondelle de frottement 98 est munie également de deux paires de pattes 104 d'activation de cette rondelle 98, venues de matière avec la première rondelle de frottement 98. Les pattes d'activation 104 d'une paire sont liées angulairement avec les extrémités d'un organe élastique 28A, 28B correspondant lorsque celui-ci est au repos.

Chaque patte d'activation 104 est délimitée par une surface de contact avec l'organe élastique 28A, 28B correspondant. Plus particulièrement, chaque patte d'activation 104 comporte un siège pour l'organe élastique 28A, 28B correspondant délimité par la surface de contact.

Le siège et au moins l'une des pattes d'entretoisement 102A sont formés par un même bord tombé de la rondelle de frottement 98, délimité par une ligne de pliage continue.

Lorsque le quatrième étage d'amortissement associé à l'amortisseur principal A1 est activé, le jeu circonférentiel entre chaque organe élastique 28A, 28B et le contour d'une fenêtre 32 correspondante du voile 24 est annulé, si bien que le voile 24 vient en appui contre une des extrémités de l'organe élastique 28A, 28B pour comprimer cet organe élastique 28A, 28B. Ainsi, la patte d'activation 104, en contact avec l'extrémité de l'organe élastique 28A, 28B coopérant avec le voile 24, se déplace conjointement avec cette extrémité et le voile 24 pour entraîner en rotation la première rondelle de frottement 98 et donc la seconde rondelle de frottement 100.

Deux surfaces de frottement complémentaires radiales F4, F4' sont portées par la seconde rondelle de guidage 16B et la première rondelle de frottement 98.

Deux surfaces de frottement complémentaires radiales G4, G'4 sont portées par la seconde rondelle de frottement 100 et la rondelle élastique 96.

Les surfaces de frottement complémentaires F4, F4', G4, G4' sont sollicitées élastiquement en contact mutuel par la rondelle élastique 96. En effet, la rondelle élastique 96 est montée en appui entre la première rondelle de guidage 16A de l'amortisseur principal A1 et l'organe de frottement 94, plus particulièrement la seconde rondelle de frottement 100. La rondelle élastique 96 est solidarisée en rotation avec la rondelle de guidage 16A de l'amortisseur principal A1 à l'aide de moyens classiques, par exemple par coopération de pattes radiales et encoches complémentaires.

On décrira ci-dessous les principaux aspects du fonctionnement de l'embrayage à friction 10 illustré sur les figures 1 et 2 qui est équipé d'un pré-amortisseur A2 selon l'exemple de réalisation de l'invention détaillé aux figures 4 à 7.

Lorsque le moteur du véhicule automobile fonctionne à un régime de ralenti, l'amortisseur principal A1 se comporte comme un organe rigide en raison de la raideur relativement élevée de ses organes élastiques 44A, 44B, 46A, 46B. Dans ce cas, le couple de rotation fourni par le vilebrequin du moteur est directement transmis du disque de friction 12 au voile annulaire 24 de l'amortisseur principal A1.

Les rondelles de guidage 34A, 34B étant solidaires en rotation du voile 24 de l'amortisseur principal A1, le couple de rotation est également transmis aux rondelles de guidage 34A, 34B.

Le couple de rotation est alors transmis de ces rondelles de guidage 34A, 34B au voile annulaire 42 du pré-amortisseur A2, et donc au moyeu 14, par l'intermédiaire des organe élastiques 44A, 44B, 46A, 46B.

Les vibrations et irrégularités de couple sont amorties dans un premier temps par les organes élastiques à activation immédiate 44A, 44B du pré-amortisseur A2 et par les premiers moyens de frottement à activation immédiate associés au pré-amortisseur A2, c'est-à-dire les surfaces de frottement F1, F'1, G1, G'1.

Dans l'exemple de réalisation illustré, lorsque le débattement angulaire entre les rondelles de guidage 34A, 34B et le voile annulaire 42 du pré-amortisseur A2 dépasse l'angle seuil de pré-amortisseur A2, les vibrations et irrégularités sont également amorties par les organes élastiques à activation conditionnelle 46A, 46B du pré-amortisseur A2 et par les seconds moyens de frottements à activation conditionnelle associés au pré-amortisseur A2, c'est-à-dire les surfaces de frottement F2, F'2, G2 et G'2.

Le voile annulaire 24 comporte à sa périphérie radialement interne la denture interne 23 qui engrène, avec un jeu circonférentiel "J" donné, avec la denture externe 15e correspondante du moyeu 14. La denture interne 23 du voile 24 forme des saillies sensiblement radiales destinées à coopérer avec des évidements complémentaires externes du moyeu 14.

Lorsque le débattement angulaire entre le voile 42 du pré-amortisseur A2 et les rondelles de guidage 34A, 34B est égal au jeu circonférentiel J prédéterminé entre le voile 24 et le moyeu 14, le voile 24 et le moyeu 14 coopèrent entre eux par butée. Dans ce cas, le pré-amortisseur A2 n'intervient plus dans la transmission du couple qui est directement transmis du voile 24 de l'amortisseur principal A1 au moyeu 14.

Par conséquent, le couple est alors uniquement transmis du disque de friction 12 au moyeu 14 par l'intermédiaire de l'amortisseur principal A1.

Les vibrations et irrégularités du couple sont amorties dans un premier temps par les organes élastiques 26A, 26B à activation immédiate de l'amortisseur principal A1 et par les troisièmes moyens de frottement à activation immédiate associés à l'amortisseur principal A1, c'est-à-dire les surfaces de frottement F3, F3', G3 et G'3.

Lorsque le débattement angulaire entre les rondelles de guidage 16A, 16B et le voile annulaire 24 de l'amortisseur principal A1 dépasse l'angle seuil de l'amortisseur principal A1, les vibrations et irrégularités sont également amorties par les organes élastiques à activation conditionnelle 28A, 28B de l'amortisseur principal A1 et par les quatrièmes moyens de frottement à activation conditionnelle associés à l'amortisseur principal A1, c'est-à-dire les surfaces de frottement F4, F'4, G4, G'4.

Avantageusement, on obtient ainsi quatre étages d'amortissement, qui s'activent successivement en fonction du débattement angulaire entre le disque de friction 12 et le moyeu 14.

Dans une variante de réalisation non représentée de l'invention qui vient d'être décrite, les vibrations et irrégularités sont également amorties par les organes élastiques à activation conditionnelle 46A, 46B du pré-amortisseur A2 et par les seconds moyens de frottements à activation conditionnelle (surfaces F2, F'2, G2 et G'2) associés au pré-amortisseur A2, lorsque le débattement angulaire entre les rondelles de guidage 34A, 34B et le voile 42 du pré-amortisseur A2 s'effectue selon l'un ou l'autre des sens de rotation illustrés par les flèches R et D à la figure 3 et correspondant respectivement par au sens rétrograde dit "rétro" et au sens de rotation "direct" lequel est opposé au sens "rétro".

Dans une variante de réalisation non représentée de l'invention qui vient d'être décrite, les vibrations et irrégularités sont également amorties par les organes élastiques à activation conditionnelle 28A, 28B de l'amortisseur principal A1 et par les quatrièmes moyens de frottement à activation conditionnelle (surfaces F4, F'4, G4, G'4) associés à l'amortisseur principal A1, lorsque le débattement angulaire entre les rondelles de guidage 16A, 16B et le voile annulaire 24 de l'amortisseur principal A1 s'effectue selon l'un ou l'autre des sens de rotation rétro ou direct illustrés par les flèches R et D à la figure 3.

Par convention, on appelle généralement sens direct D, le sens habituel de rotation permettant de transmettre un couple provenant du moteur vers l'arbre mené, et sens rétrograde R le sens de rotation opposé au sens direct D.

Avantageusement, en plus de remplir les fonctions décrites précédemment, la rondelle de frottement à hystérésis variable 64 simplifie le montage du dispositif à friction 10.

En effet, lorsque les pattes 68 de la rondelle de frottement 64 sont encliquetées dans les organes élastiques 46A, 46B, la rondelle d'hystérésis 64 et le pré-amortisseur A2 forment un module pré-assemblé, encore appelé "cassette", pouvant être monté en une seule opération sur le dispositif à friction 10.

De préférence, le module pré-assemblé comporte également le voile 24 de l'amortisseur principal A1, sur lequel sont fixées des rondelles de guidage 34A, 34B du pré-amortisseur A2.

Le module pré-assemblé comporte donc au moins les rondelles de guidage 34A, 34B, le voile 42 du pré-amortisseur A2, les moyens d'amortissement 43A, 43B comportant au moins un organe élastique 46A, 46B à activation conditionnelle et la rondelle de frottement intercalaire 70 intercalée axialement entre la rondelle tiroir 76 et la rondelle d'hystérésis 64, la rondelle d'hystérésis 64 étant encliquetée sur chaque organe élastique 46A, 46B à activation conditionnelle du pré-amortisseur A2.

On décrira maintenant plus particulièrement le fonctionnement du système de frottement à tiroir 74.

La rondelle tiroir 76 est associée au voile annulaire 24 de l'amortisseur A1 pour freiner les chocs de la denture interne 23 du voile 24 sur la denture externe 15e du moyeu 14, qui surviennent en particulier par l'augmentation du couple de rotation transmis par l'embrayage à friction 10.

La rondelle tiroir 76 entoure la denture externe 15e du moyeu 14 et comporte elle-même la denture interne 78 qui est destinée à engrener avec la denture externe 15e du moyeu 14, avec un jeu circonférentiel "j" prédéterminé qui est inférieur au jeu circonférentiel "J" entre les dentures 15e du moyeu 14 et 23 du voile 24, comme on peut le voir notamment sur la figure 3.

Tel qu'illustré à la figure 5, la rondelle tiroir 76 est interposée axialement entre la première rondelle de guidage 34A et la rondelle intercalaire de frottement 70.

Avantageusement, la rondelle intercalaire de frottement 70 sépare respectivement la rondelle tiroir 76 de la rondelle d'hystérésis 64 du système d'hystérésis 62 qui lui est juxtaposé axialement et dont la rondelle élastique d'application 66 sollicite axialement, à travers la rondelle d'hystérésis 64 et la rondelle intercalaire 70, la rondelle tiroir 76 en direction de la rondelle de guidage 34A.

Au régime de ralenti, la denture interne 23 du voile 24 et la denture interne 78 de la rondelle tiroir 76 restent écartées de la denture externe 15e du moyeu 14 (figure 3). Quand le couple transmis augmente, les organes élastiques à activation immédiate 44A, 44B du pré-amortisseur A2 sont tout d'abord comprimés puis par les organes élastiques à activation conditionnelle 46A, 46B lorsque le débattement angulaire entre les rondelles de guidage 34A, 34B et le voile annulaire 42 dépasse l'angle seuil de pré-amortisseur A2.

La denture interne 23 du voile 24 et la denture interne 78 de la rondelle tiroir 76 se déplacent alors par rapport au moyeu 14, la rondelle tiroir 76 étant appliquée avec une force axiale sur la rondelle de guidage 34A par la rondelle élastique 66 et la rondelle élastique 66 qui est liée en rotation à la rondelle de guidage 16A de l'amortisseur A1 est donc ainsi indirectement solidaire en rotation du voile 24.

Quand le couple transmis augmente, le jeu circonférentiel j prédéterminé étant annulé, la denture 78 de la rondelle tiroir 76 va venir buter sur la denture 15e du moyeu 14 de sorte que la rondelle tiroir 76 soit solidaire en rotation du moyeu 14.

Quand le couple transmis augmente encore, le denture 23 du voile 24 se rapproche de la denture 15e du moyeu 14 jusqu'à venir en butée sur celle-ci, mais ce mouvement est freiné par le frottement de la rondelle tiroir 76 contre la rondelle de guidage 34A, l'importance du frottement étant déterminée par la force axiale développée par la rondelle élastique 66.

Si lors de ce mouvement, le frottement de la rondelle tiroir 76 contre la rondelle de guidage 34A provoque l'essentiel du freinage, il est à noter que les frottements produits par le système d'hystérésis 62 participe aussi à créer un freinage.

De manière connue, après montage du voile 42 sur le moyeu 14, la liaison en rotation sans jeu entre le voile annulaire 42 et le moyeu 14 est généralement réalisée par sertissage, par exemple par écrasement axial d'une partie de la denture externe 15e de manière à assurer une parfaite liaison entre les pièces 14 et 42.

Or, comme l'entraînement de la rondelle tiroir 76 s'effectue ici par engrènement au moyen de la denture interne 78, un tel sertissage conventionnel par écrasement de la denture externe 15e du moyeu 14 pour réaliser la liaison avec le voile 42 n'est pas possible.

En effet, une partie de la denture 15e doit être conservée libre pour permettre l'engrènement de la denture 78 de la rondelle tiroir 76.

Avantageusement, le moyeu 14 est donc réalisé par frittage.

De préférence, la denture externe 15e du moyeu fritté 14 est étagée et comporte une partie, dite supérieure, pourvue de rainures afin de réaliser une liaison sans jeu par sertissage entre le voile 42 du pré-amortisseur A2 et la denture 15e, et une partie adjacente, dite inférieure, qui reste libre axialement pour permettre l'engrènement de la rondelle tiroir 76 suivant le jeu circonférentiel j prédéterminé.

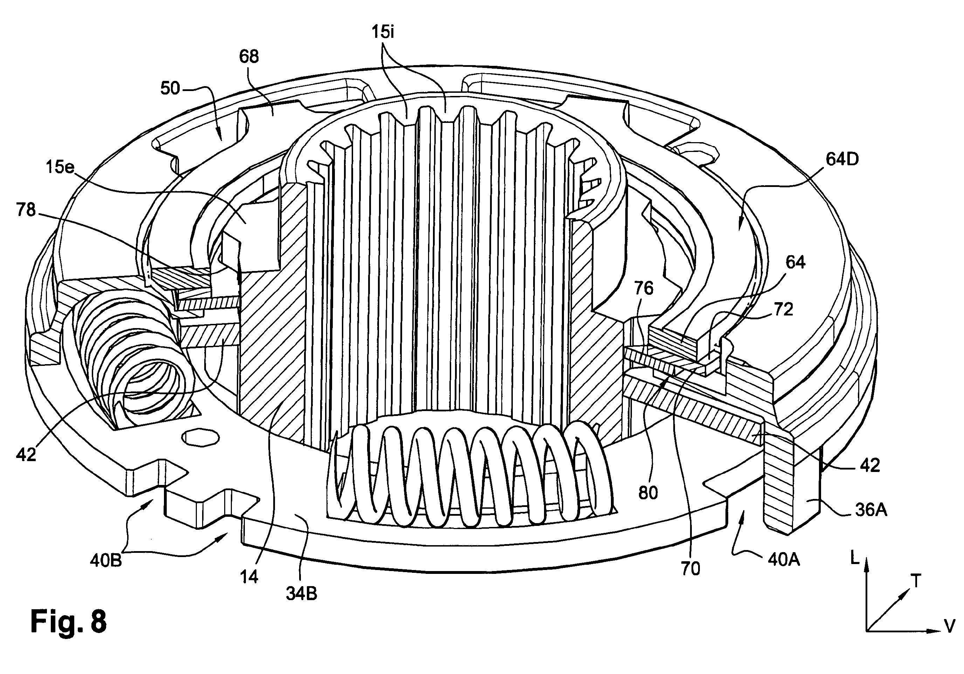

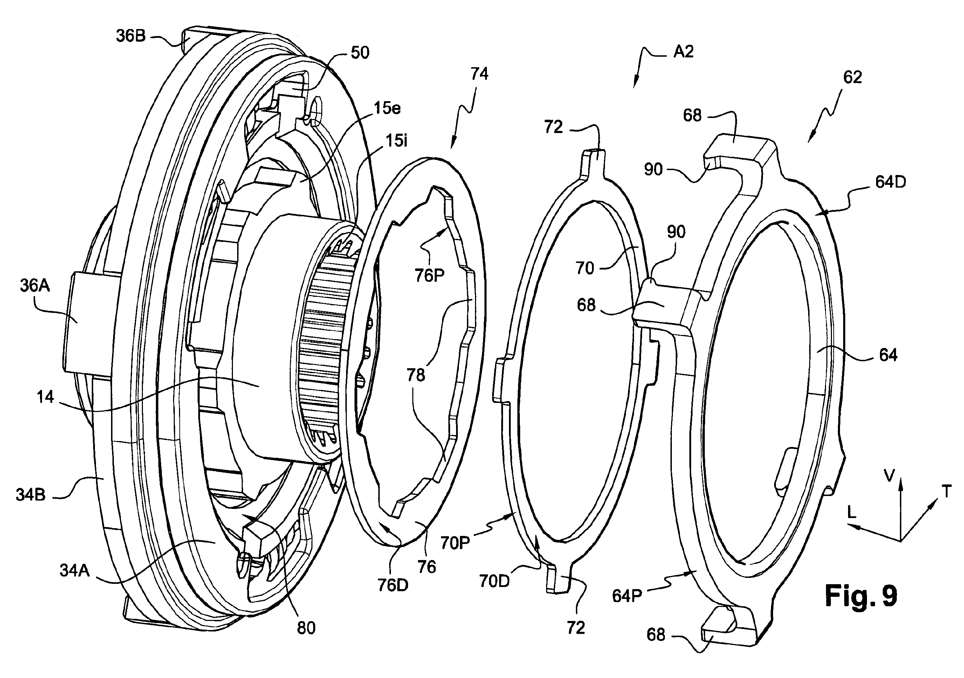

On décrira maintenant, par comparaison avec l'exemple de réalisation précédent, une première variante de réalisation du système de frottement 62 à hystérésis variable illustré aux figures 8 et 9.

Selon cette première variante, le pré-amortisseur A2 comporte comme précédemment une rondelle de guidage 34A réalisée en matière plastique, une rondelle tiroir 76 et une rondelle intercalaire de frottement réalisées toutes deux en un matériau métallique, tel que de l'acier.

Dans cette première variante de réalisation, la rondelle d'hystérésis variable 64 n'est plus réalisée en un matériau métallique, mais est réalisée directement en matière plastique, éventuellement renforcée de fibres.

Avantageusement, la première rondelle de frottement 82 et la deuxième rondelle de frottement 84 sont donc supprimées et le système d'hystérésis 62 est simplifié et, le cas échéant, d'un moindre encombrement axial.

La face distale 64D de frottement et la face proximale 64P de frottement sont en conséquence portées directement par la rondelle d'hystérésis variable 64 en matière plastique et on conserve les mêmes type de frottement que dans l'exemple de réalisation préféré.

En effet, la rondelle d'hystérésis variable 64 présente comme précédemment des types de frottement mixtes, c'est-à-dire du côté de sa face proximale 64P associée à la rondelle intercalaire 70 un frottement de type plastique/acier tandis qu'elle présente du côté opposé de sa face distale 64D un frottement de type plastique/acier avec la face 66P de la rondelle élastique 66.

Avantageusement, la rondelle d'hystérésis 64 est munie également, à sa périphérie externe, de deux paires de pattes 68 d'activation de la rondelle 64 analogues à celles décrites précédemment.

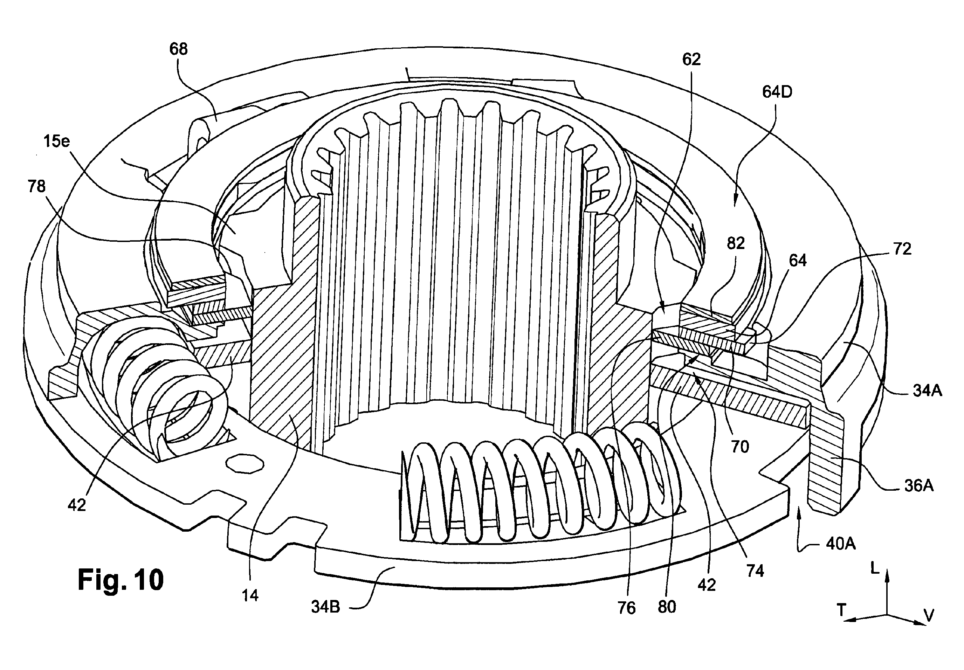

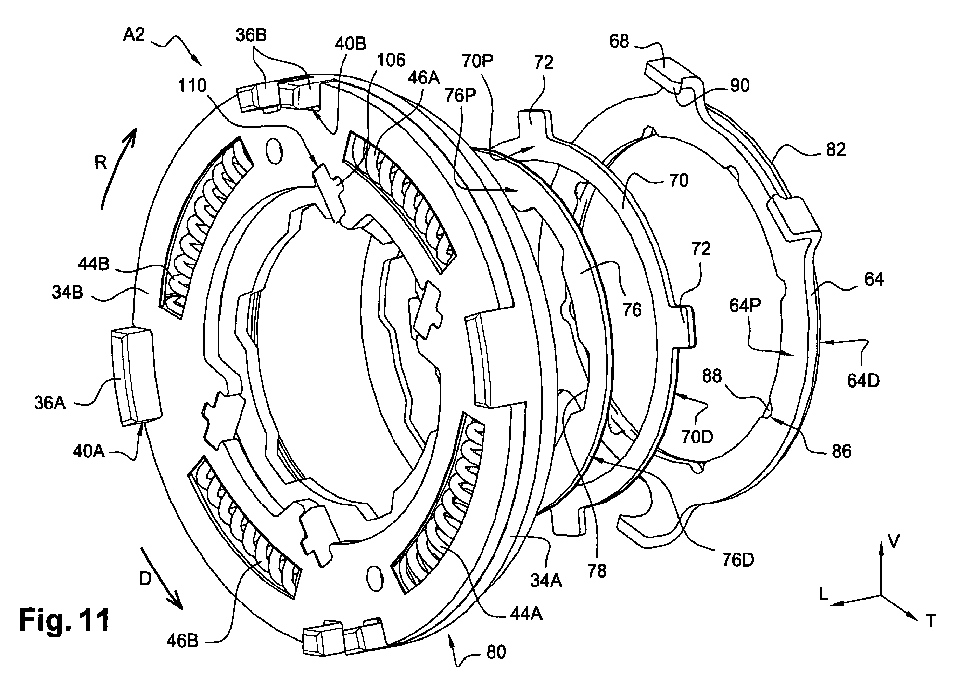

On décrira maintenant, par comparaison avec l'exemple de réalisation préféré décrit précédemment, une deuxième variante de réalisation du système de frottement 62 à hystérésis variable illustré aux figures 10 et 11.

Selon cette deuxième variante, le pré-amortisseur A2 comporte aussi une rondelle de guidage 34A réalisée en matière plastique et une rondelle tiroir 76 réalisées en un matériau métallique, tel que de l'acier.

Toutefois, la rondelle intercalaire de frottement 70 disposée axialement entre le système d'hystérésis 62 et le système à tiroir 74 est ici réalisée en matière plastique, éventuellement renforcée de fibres.

Dans cette deuxième variante de réalisation, la rondelle d'hystérésis variable 64 est réalisée en un matériau métallique, tel que de l'acier ou un matériau analogue, et comporte une rondelle de frottement uniquement sur l'une de ses faces annulaires.

Plus précisément, la rondelle d'hystérésis 64 comporte une rondelle de frottement 82 rapportée de manière solidaire sur sa face distale située en vis-à-vis de la rondelle élastique 66 en acier. Avantageusement, la première rondelle de frottement 82 est fabriquée en matière plastique, éventuellement renforcée de fibres.

La face distale 64D formant la surface de frottement est donc portée par cette première rondelle de frottement 82 en matière plastique qui est solidaire en rotation de la rondelle d'hystérésis variable 64 tandis que la face proximale 64P de frottement est portée directement par la rondelle d'hystérésis 64 en acier.

Ainsi, la rondelle d'hystérésis variable 64 présente du côté de sa face proximale 64P associée à la rondelle intercalaire 70 en acier un frottement de type acier/acier tandis qu'elle présente, du côté opposé de sa face distale 64D, un frottement de type plastique/acier avec la face 66P de la rondelle élastique 66.

Avantageusement, la rondelle de frottement 82 est solidarisée en rotation avec la rondelle d'hystérésis variable 64 par collage ou par coopération de formes entre des ergots 88 qui coopèrent avec des encoches 86 ménagées sur un contour interne de la rondelle d'hystérésis 64.

La rondelle d'hystérésis 64 comporte à sa périphérie externe de deux paires de pattes 68 d'activation en prise avec une paire d'extrémités d'un organe élastique 46A, 46B correspondant.

Avantageusement, le système de frottement à tiroir 74 constitue une solution fiable et économique pour limiter les bruits indésirables provoqués par les chocs entre la denture externe 15e du moyeu 14 et la denture interne 23 du voile 24.

Pour ce faire, la rondelle tiroir 76, en coopérant par frottement respectivement avec la rondelle de guidage 34A et la rondelle intercalaire 70, agit comme un frein destiné à éviter que lesdites dentures 15e et 23 ne s'entrechoquent.

Toutefois, pour certaines applications particulières, il est possible qu'une telle rondelle tiroir 76 ne soit pas suffisante pour supprimer totalement les bruits indésirables.

Avantageusement, le système de frottement à tiroir 74 est alors complété par des moyens de butée angulaire déformables élastiquement qui, aptes à absorber tout ou partie du choc lorsque la denture externe 15e du moyeu 14 et la denture interne 23 du voile 24 s'entrechoquent, interviennent après le freinage opérée par la rondelle tiroir 76.

De tels moyens de butée angulaire déformables élastiquement sont par exemple décrit dans le document FR-A-2.725.256.

Toutefois, conformément à ce document de l'état de la technique, la butée angulaire déformable élastiquement est susceptible d'être déformée sans limite, par écrasement, ce qui participe à en réduire la durée de vie en accélérant notamment son usure.

C'est la raison pour laquelle, le pré-amortisseur A2 de l'embrayage à friction 10 comporte avantageusement :
- des premiers moyens de butée 106 comportant au moins une butée angulaire déformable élastiquement qui est agencée sur l'une 34B des rondelles de guidage 34A, 34B formant l'élément d'entrée du pré-amortisseur A2 et qui, lorsque ladite rondelle de guidage 34B se déplace dans au moins l'un des sens de rotation direct D ou rétrograde R, est apte à amortir les chocs entre la denture externe 15e du moyeu 14 et la denture interne 23 du voile 24 de l'amortisseur A1, et
- des seconds moyens de butée 108 comportant au moins une butée angulaire rigide qui est disposée en retrait angulairement par rapport à la butée angulaire déformable élastiquement pour limiter la déformation angulaire des premiers moyens de butée et qui est constituée par au moins l'une des faces de la denture interne 23 du voile 24 qui forme l'élément de sortie de l'amortisseur principal A1.

Lorsque les vibrations sont importantes, la denture externe 15e formant une butée angulaire du moyeu 14 qui constitue l'organe de sortie de l'embrayage à friction 10 vient en contact avec les premiers moyens de butée déformables élastiquement 106 qui, après avoir été préalablement freiné par le frottement de la rondelle tiroir 76, se déforment alors en absorbant le choc et cela jusqu'à ce que la denture externe 15e vienne en contact avec les seconds moyens de butée angulaire rigide 108.

Avantageusement, les premiers moyens de butée déformable élastiquement 106 sont portés par la seconde rondelle de guidage 34B, tandis que les seconds moyens de butée angulaire rigide 108 sont portés par le voile 24 de l'amortisseur A1, comme illustré sur la figure 3 et la figure 11 sur laquelle le moyeu 14 n'a pas été représenté.

Tel qu'illustré à la figure 11, la seconde rondelle de guidage 34B du pré-amortisseur comporte les premiers moyens de butée 106 constitués par des plots déformables élastiquement, par exemple réalisés en caoutchouc naturel ou synthétique.

Les plots 106 sont agencés sur la périphérie interne de la rondelle 34B, dans des évidements 110 complémentaires, et sont susceptibles de coopérer avec les butées angulaires du moyeu 14, c'est-à-dire l'une des faces obliques que comporte chacune des dents formant la denture externe 15e, lorsque le débattement entre le moyeu 14 et l'ensemble rotatif que forment les rondelles de guidage 34A, 32B du pré-amortisseur A2 solidaires en rotation du voile 24 de l'amortisseur principal A1, atteint une valeur prédéterminée ici dans le sens direct D.

Les plots déformables élastiquement 106 sont agencés sur la seconde rondelle de guidage 34B de manière que chaque butée angulaire rigide 108 formée par une face de la denture interne 23 du voile 24 soit en retrait angulairement par rapport à chaque plot 106 formant la butée angulaire déformable.

En effet, chaque butée angulaire rigide 108 formée par une face de la denture interne 23 du voile 24 est aussi destinée à coopérer avec la butée angulaire formée par au moins l'une des faces de la denture externe 15e selon le sens de rotation direct D ou rétro R.

Ainsi, lorsque la face de butée angulaire de chaque dent de la denture externe 15e du moyeu 14 vient en contact avec le plot déformable 106 correspondant, celui-ci se déforme en absorbant le choc jusqu'à ce que la face de butée angulaire de la dent vienne en contact avec la butée angulaire rigide formée par une face correspondante de la dent correspondante de la denture interne 23 du voile 24.

Grâce à l'action conjuguée de tels moyens 106, 108 et du système à tiroir 74, les chocs entre la denture externe 15e du moyeu 14 et la denture interne 23 du voile 24, sont successivement freinés et amortis de sorte que les bruits indésirables correspondants soient totalement supprimés.

Pour de plus amples détails sur la réalisation des tels dispositifs pourvus de premiers moyens de butée 106 comportant au moins une butée angulaire déformable élastiquement et de seconds moyens de butée 108 comportant au moins une butée angulaire rigide qui est disposée en retrait angulairement par rapport à la butée angulaire déformable élastiquement pour limiter la déformation angulaire des premiers moyens de butée, on pourra se reporter à la demande de brevet français N° 06.52057 de la Demanderesse déposée le 08.06.2006 (non publiée).

De préférence et tel qu'illustré notamment aux figures 1 à 3, l'amortisseur principal A1 est un amortisseur comportant deux étages d'amortissement qui est encore appelé un amortisseur bi-pentes en raison de la courbe correspondante obtenue en représentant le couple transmis en fonction du débattement angulaire.

La figure 3 du document FR-A-2.804.190 représente un exemple de représentation graphique du couple transmis (en ordonnée) en fonction du débattement angulaire (en abscisse) à la description correspondante de laquelle on se reportera avantageusement.

Comme cela est représenté sur cette figure 3, la courbe comportent quatre parties distinctes, respectivement des parties A et B qui correspondent aux deux étages du pré-amortisseur A2 et des parties C et D qui correspondent aux étages de l'amortisseur principal A1.

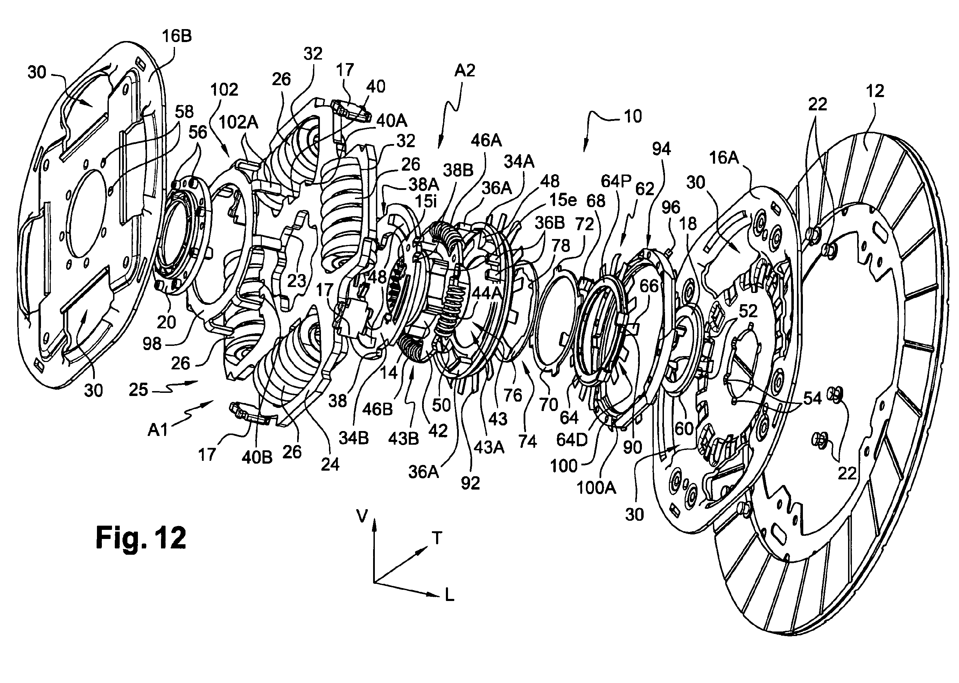

Selon une variante représentée à la figure 12, l'amortisseur principal A1 est un amortisseur à un étage d'amortissement, encore appelé un amortisseur monopente.

Par comparaison avec l'exemple de réalisation préféré de la figure 2, les moyens d'amortissement 25 de l'amortisseur principal sont alors constitués uniquement par des organes élastiques à activation immédiate, tels que quatre ressorts hélicoïdaux 26.

Les fenêtres 32 du voile 24 sont toutes identiques et ne sont pas donc différenciées comme précédemment en fonction des moyens d'amortissement 25 associés ainsi qu'illustré à la figure 3.

Les moyens d'hystérésis associés à l'amortisseur principal A1 1 sont similaires, en particulier les moyens décrits précédemment comme les troisièmes moyens sont maintenus.

Par comparaison, la première rondelle de frottement 98 des quatrièmes moyens décrits précédemment ne comporte cependant ici plus de pattes d'activation 104, lesquelles sont supprimées dès lors que les moyens d'amortissement 25 sont tous à activation immédiate.

Avantageusement, l'organe de frottement 94 comporte donc des première 98 et seconde 100 rondelles de frottement coaxiales afin d'accroître les frottements d'hystérésis associés à l'amortisseur A1.

Avantageusement, le pré-amortisseùr A2 est identique, c'est à dire un amortisseur du type bi-pentes comportant deux étages d'amortissement, de même que sont identiques les systèmes de frottement à hystérésis 62 et à tiroir 74 selon l'invention dont la structure et le fonctionnement sont analogues.

## Revendications

1. Embrayage à friction (10), notamment pour véhicule automobile, comportant :
- un amortisseur principal (A1) interposé entre un élément d'entrée, tel qu'un disque de friction (12), et un voile annulaire (24) entourant un moyeu (14) solidaire en rotation d'un arbre mené, le moyeu (14) comportant une denture externe (15e) destinée à engrener avec un jeu circonférentiel (J) avec une denture interne (23) du voile (24),
dans lequel l'amortisseur principal (A1) comporte des première (16A) et seconde (16B) rondelles principales de guidage solidaires en rotation entre elles, et un voile annulaire (24) qui, solidaire en rotation des rondelles de guidage (34A, 34B) d'un amortisseur secondaire (A2), est coaxial aux rondelles principales de guidage (16A, 16B) et mobile en rotation par rapport à ces rondelles principales de guidage (16A, 16B) et comportant, couplé en série avec l'amortisseur principal (A1),
- l'amortisseur secondaire (A2), dit pré-amortisseur, comportant les première (34B) et seconde (34A) rondelles de guidage solidaires en rotation entre elles, un voile annulaire (42) coaxial aux rondelles de guidage (34A, 34B) et mobile en rotation par rapport aux rondelles de guidage (34A, 34B), des moyens d'amortissement à activation immédiate (43A) et des moyens d'amortissement à activation conditionnelle (43B) qui comportent un groupe d'organes élastiques à activation conditionnelle (46A, 46B) transmettant un couple entre les rondelles de guidage (34A, 34B) et le voile annulaire (42), et
- un système de frottement à hystérésis variable (62), dit système d'hystérésis, du pré-amortisseur (A2) comportant des moyens d'hystérésis à activation conditionnelle qui, agencés entre le voile (42) du pré-amortisseur et la première rondelle principale de guidage (16A) de l'amortisseur (A1), comportent au moins une rondelle d'hystérésis variable (64) comportant respectivement une face proximale de frottement (64P) et une face distale de frottement (64D), la face distale de frottement (64D) étant destinée à coopérer avec une face de frottement (66P) portée par une rondelle élastique d'application (66) du système d'hystérésis (62), la rondelle d'hystérésis variable (64) comportant pour son activation au moins une patte d'activation (68) qui est liée angulairement avec un organe élastique (46A, 46B) associé,
**caractérisé en ce que** l'embrayage à friction (10) comporte une rondelle de frottement (70), dite intercalaire, qui est liée en rotation par des moyens de liaison (72), tels que des pattes, à la rondelle de guidage (34A) du pré-amortisseur (A2) et qui, libre axialement, est interposée entre la face proximale de frottement (64P) de la rondelle d'hystérésis (64) et un système de frottement à tiroir (74), le système de frottement à tiroir (74) comportant une rondelle de frottement (76), dite rondelle tiroir, qui est interposée axialement entre une face proximale de frottement (70P) de la rondelle intercalaire (70) et la rondelle de guidage (34A) du pré-amortisseur (A2) et qui est soumise à une force élastique axiale la sollicitant en direction de la rondelle de guidage (34A), la rondelle tiroir (76) comportant des moyens d'entraînement (78), tels qu'une denture interne, destinés à entraîner en rotation la rondelle tiroir (76) avec un jeu circonférentiel (j) inférieur au jeu circonférentiel (J) précité entre la denture externe (15e) du moyeu (14) et la denture interne (23) du voile (24) de l'amortisseur (A1).

2. Embrayage à friction (10) selon la revendication 1, **caractérisé en ce que** la force élastique axiale sollicitant la rondelle tiroir (76) est développée par la rondelle élastique (66) d'application du système d'hystérésis (62) de manière que le système de frottement à tiroir (74) est du type dépendant.

3. Embrayage à friction (10) selon l'une des revendications 1 ou 2, **caractérisé en ce que** la rondelle tiroir (76) est réalisée dans un matériau métallique, tel que de l'acier ou un matériau analogue.

4. Embrayage à friction (10) selon l'une quelconque des revendications précédentes, **caractérisé en ce que** la rondelle de frottement intercalaire (70), disposée axialement entre le système d'hystérésis (62) et le système à tiroir (74), est réalisée dans un matériau métallique, tel que de l'acier ou un matériau analogue.

5. Embrayage à friction (10) selon l'une quelconque des revendications 1 à 3, **caractérisé en ce que** la rondelle de frottement intercalaire (70), disposée axialement entre le système d'hystérésis (62) et le système à tiroir (74), est réalisée en matière plastique.

6. Embrayage à friction (10) selon l'une quelconque des revendications précédentes, **caractérisé en ce que** la rondelle d'hystérésis (64) portant les faces distale et proximale de frottement (64D, 64P) est réalisée en un matière plastique.

7. Embrayage à friction (10) selon l'une quelconque des revendications précédentes, **caractérisé en ce que** la rondelle d'hystérésis (64) est réalisée en un matériau métallique, tel que de l'acier, et **en ce que** au moins la face distale de frottement (64D) est portée par une rondelle de frottement (82) en matière plastique qui est solidaire en rotation de la rondelle d'hystérésis (64).

8. Embrayage à friction (10) selon la revendication 7, **caractérisé en ce que** la face proximale de frottement (64P) est portée par une rondelle de frottement (84) en matière plastique qui est solidaire en rotation de la rondelle d'hystérésis (64), en particulier lorsque la rondelle de frottement intercalaire (70) est réalisée en matériau métallique afin de créer un frottement de type acier/plastique.

9. Embrayage à friction (10) selon l'une quelconque des revendications précédentes, **caractérisé en ce que** la patte d'activation (68) de la rondelle d'hystérésis (64) comporte des surfaces de contact avec respectivement l'organe élastique (46A, 46B) à activation conditionnelle associé et le voile (42) du pré-amortisseur (A2), la surface de contact de la patte d'activation (68) avec l'organe élastique comportant des moyens d'accrochage (90), tels qu'un ergot, destinés à coopérer avec l'organe élastique à activation conditionnelle (46A, 46B) associé afin d'accrocher la rondelle d'hystérésis (64) sur le pré-amortisseur (A2).

10. Embrayage à friction (10) selon l'une quelconque des revendications précédentes, **caractérisé en ce que** le moyeu (14) est réalisé par frittage.

11. Embrayage à friction (10) selon l'une quelconque des revendications précédentes, **caractérisé en ce que** l'embrayage à friction (10) comporte un module pré-assemblé constitué au moins par les rondelles de guidage (34A, 34B), le voile (42) du pré-amortisseur (A2), les moyens d'amortissement (43A, 43B) comportant au moins un organe élastique (46A, 46B) à activation conditionnelle et la rondelle de frottement intercalaire (70) disposée entre la rondelle tiroir (76) et la rondelle d'hystérésis (64).

12. Embrayage à friction (10) selon l'une quelconque des revendications précédentes, **caractérisé en ce que** l'embrayage à friction (10) comporte :
- des premiers moyens de butée (106) comportant au moins une butée angulaire déformable élastiquement qui est agencée sur l'une (34B) des rondelles de guidage (34A, 34B) formant l'élément d'entrée du pré-amortisseur (A2) et qui, lorsque ladite rondelle de guidage (34B) se déplace dans au moins l'un des sens direct (D) ou rétrograde (R), est apte à amortir les chocs entre la denture externe (15e) du moyeu (14) et la denture interne (23) du voile (24) de l'amortisseur (A1), et
- des seconds moyens de butée (108) comportant au moins une butée angulaire rigide qui est disposée en retrait angulairement par rapport à la butée angulaire déformable élastiquement pour limiter la déformation angulaire des premiers moyens de butée et qui est constituée par au moins l'une des faces de la denture interne (23) du voile (24) qui forme l'élément de sortie de l'amortisseur principal (A1).

## Patentansprüche

1. Reibungskupplung (10), insbesondere für Kraftfahrzeuge, umfassend:
- einen zwischen ein Eingangselement wie eine Reibungsscheibe (12) und eine ringförmige Flanschscheibe (24), die eine drehfest mit einer Abtriebswelle verbundene Nabe (14) umgibt, eingesetzten Hauptdämpfer (A1), wobei die Nabe (14) eine Außenzahnung (15e) aufweist, die dazu bestimmt ist, mit einem Umfangsspiel (J) mit einer Innenzahnung (23) der Flanschscheibe (24) ineinander zu greifen, wobei der Hauptdämpfer (A1) miteinander drehfest verbundene erste (16A) und zweite (16B) Haupt-Führungsscheiben und eine Flanschscheibe (24) umfasst, welche, drehfest mit Führungsscheiben (34A, 34B) eines mit dem Hauptdämpfer (A1) in Reihe geschalteten Sekundärdämpfers (A2) verbunden, koaxial mit den Haupt-Führungsscheiben (16A, 16B) und drehbeweglich zu diesen Haupt-Führungsscheiben (16A, 16B) ist,
- wobei der als Vordämpfer bezeichnete Sekundärdämpfer (A2) die drehfest miteinander verbundene erste (34B) und zweite (34A) Führungsscheibe, eine ringförmige Flanschscheibe (42), welche koaxial mit den Führungsscheiben (34A, 34B) und drehbeweglich zu den Führungsscheiben (34A, 34B) ist, Dämpfungsmittel mit unmittelbarer Aktivierung (43A) und Dämpfungsmittel mit bedingter Aktivierung (43B) umfasst, die eine Gruppe von elastischen Organen mit bedingter Aktivierung (46A, 46B) umfassen, welche zwischen den Führungsscheiben (34A, 34B) und der ringförmigen Flanschscheibe (42) ein Drehmoment übertragen, und
- wobei ein als Hysterese-System bezeichnetes Reibungssystem mit variabler Hysterese (62) des Vordämpfers (A2) Hysteresemittel mit bedingter Aktivierung umfasst, die, angeordnet zwischen der Flanschscheibe (42) des Vordämpfers (A2) und der ersten Haupt-Führungsscheibe (16A) des Dämpfers (A1), zumindest eine variable Hysteresescheibe (64) umfassen, welche jeweils eine proximale Reibungsfläche (64P) und eine distale Reibungsfläche (64D) aufweist, wobei die distale Reibungsfläche (64D) dazu bestimmt ist, mit einer von einer elastischen Auflagescheibe (66) des Hysterese-Systems (62) getragenen Reibungsfläche (66P) zusammenzuwirken, wobei die variable Hysteresescheibe (64) für ihre Aktivierung mindestens eine Aktivierungslasche (68) umfasst, die winkelmäßig mit einem zugehörigen elastischen Organ (46A, 46B) verbunden ist, **dadurch gekennzeichnet, dass** die Reibungskupplung (10) eine als Zwischenlage-Scheibe bezeichnete Reibscheibe (70) umfasst, die rotatorisch durch Verbindungsmittel (72) wie Laschen mit der Führungsscheibe (34A) des Vordämpfers (A2) verbunden ist und die axial frei zwischen die proximale Reibungsfläche (64P) der Hysteresescheibe (64) und ein Einschub-Reibsystem (74) eingesetzt ist, wobei das Einschub-Reibsystem (74) eine als Einschubscheibe bezeichnete Reibscheibe (76) umfasst, die axial zwischen eine proximale Reibungsfläche (70P) der Zwischenlage-Scheibe (70) und die Führungsscheibe (34A) des Vordämpfers (A2) eingesetzt ist, und die einer axialen elastischen Kraft unterworfen ist, die sie in Richtung zu der Führungsscheibe (34A) beaufschlagt, wobei die Einschubscheibe (76) Antriebsmittel (78) wie eine Innenzahnung aufweist, die dazu bestimmt sind, die Einschubscheibe (76) rotatorisch mit einem Umfangsspiel (j) anzutreiben, welches kleiner ist als das vorgenannte Umfangsspiel (J) zwischen der Außenzahnung (15e) der Nabe (14) und der Innenzahnung (23) der Flanschscheibe (24) des Dämpfers (A1).

2. Reibungskupplung (10) nach Anspruch 1, **dadurch gekennzeichnet, dass** die die Einschubscheibe (76) beaufschlagende axiale elastische Kraft durch die elastische Auflagescheibe (66) des Hysterese-Systems (62) in der Art entwickelt wird, dass das Einschub-Reibsystem (74) von abhängiger Art ist.

3. Reibungskupplung (10) nach Anspruch 1 oder 2, **dadurch gekennzeichnet, dass** die Einschubscheibe (76) aus einem metallischen Material, wie Stahl oder einem entsprechenden Material, ausgeführt ist.

4. Reibungskupplung (10) nach einem der vorherigen Ansprüche, **dadurch gekennzeichnet, dass** die Zwischenlage-Reibscheibe (70), die axial zwischen dem Hysterese-System (62) und dem Einschub-System (74) angeordnet ist, aus einem metallischen Material, wie Stahl oder einem entsprechenden Material, ausgeführt ist.

5. Reibungskupplung (10) nach einem der Ansprüche 1 bis 3, **dadurch gekennzeichnet, dass** die Zwischenlage-Reibscheibe (70), die axial zwischen dem Hysterese-System (62) und dem Einschub-System (74) angeordnet ist, aus Kunststoff ausgeführt ist.

6. Reibungskupplung (10) nach einem der vorherigen Ansprüche, **dadurch gekennzeichnet, dass** die Hysteresescheibe (64), welche die distale und die proximale Reibungsfläche (64D, 64P) trägt, aus Kunststoff ausgeführt ist.

7. Reibungskupplung (10) nach einem der vorherigen Ansprüche, **dadurch gekennzeichnet, dass** die Hysteresescheibe (64) aus einem metallischen Material, wie Stahl, ausgeführt ist, und dadurch, dass zumindest die distale Reibungsfläche (64D) von einer Reibscheibe (82) aus Kunststoff getragen ist, die drehfest mit der Hysteresescheibe (64) ist.

8. Reibungskupplung (10) nach Anspruch 7, **dadurch gekennzeichnet, dass** die proximale Reibungsfläche (64P) von einer Reibscheibe (84) aus Kunststoff getragen ist, die drehfest mit der Hysteresescheibe (64) ist, insbesondere wenn die Zwischenlage-Reibscheibe (70) aus einem metallischen Material ausgeführt ist, um eine Reibung vom Typ Stahl/Kunststoff herzustellen.

9. Reibungskupplung (10) nach einem der vorherigen Ansprüche, **dadurch gekennzeichnet, dass** die Aktivierungslasche (68) der Hysteresescheibe (64) Flächen zum Kontakt mit jeweils dem zugehörigen elastischen Organ mit bedingter Aktivierung (46A, 46B) und der Flanschscheibe (42) des Vordämpfers (A2) trägt, wobei die Kontaktfläche der Aktivierungslasche (68) mit dem elastischen Organ Mittel zum Ankoppeln (90), wie eine Noppe, aufweisen, die dazu bestimmt sind, mit dem zugehörigen elastischen Organ mit bedingter Aktivierung (46A, 46B) zusammenzuwirken, um die Hysteresescheibe (64) an den Vordämpfer (A2) anzukoppeln.

10. Reibungskupplung (10) nach einem der vorherigen Ansprüche, **dadurch gekennzeichnet, dass** die Nabe (14) durch Sintern ausgeführt ist.

11. Reibungskupplung (10) nach einem der vorherigen Ansprüche, **dadurch gekennzeichnet, dass** die Reibungskupplung (10) ein vormontiertes Modul umfasst, welches zumindest aus den Führungsscheiben (34A, 34B), der Flanschscheibe (42) des Vordämpfers (A2), den zumindest ein elastisches Organ (46A, 46B) mit bedingter Aktivierung umfassenden Dämpfungsmitteln (43A, 43B) und der zwischen der Einschubscheibe (76) und der Hysteresescheibe (64) angeordneten Zwischenlage-Reibscheibe (70) gebildet ist.

12. Reibungskupplung (10) nach einem der vorherigen Ansprüche, **dadurch gekennzeichnet, dass** die Reibungskupplung (10) umfasst:
- erste Anschlagmittel (106), die zumindest einen elastisch verformbaren Winkel-Anschlag umfassen, der auf derjenigen (34B) der Führungsscheiben (34A, 34B) angeordnet ist, die das Eingangselement des Vordämpfers (A2) bildet, und der, wenn die besagte Führungsscheibe (34B) sich in zumindest einer der direkten (D) oder rückläufigen (R) Richtung verlagert, geeignet ist, die Stöße zwischen der Außenzahnung (15e) der Nabe (14) und der Innenzahnung (23) der Flanschscheibe (24) des Dämpfers (A1) zu dämpfen, und
- zweite Anschlagmittel (108), die zumindest einen starren Winkel-Anschlag umfassen, der relativ zu dem elastisch verformbaren Winkel-Anschlag winkelmäßig im Hintergrund angeordnet ist, um die Winkelverformung der ersten Anschlagmittel zu begrenzen, und der durch mindestens eine der Flächen der Innenzahnung (23) der Flanschscheibe (24) gebildet ist, welche das Ausgangselement des Hauptdämpfers (A1) bildet.

## Claims

1. Friction clutch device (10), in particular for a motor vehicle, comprising:
- a main damper (A1) which is interposed between an entry element, such as a friction disc (12), and an annular body (24) surrounding a hub (14) which is integral in rotation with a driven shaft, the hub (14) comprising outer toothing (15e) which is designed to engage with circumferential play (J) with inner toothing (23) of the body (24),
wherein the main damper (A1) comprises first (16A) and second (16B) main guide washers which are integral in rotation with one another, and an annular body (24), which is integral in rotation with the guide washers (34A, 34B) of a secondary damper (A2), it is coaxial to the main guide washers (16A, 16B), and is mobile in rotation relative to these main guide washers (16A, 16B), and it comprises, coupled in series with the main damper (A1):
- the secondary damper (A2), known as the pre-damper, comprising the first (34B) and second (34A) guide washers which are integral in rotation with one another, an annular body (42) which is coaxial to the guide washers (34A, 34B) and is mobile in rotation relative to the guide washers (34A, 34B), damping means (43A) with immediate activation and damping means (43B) with conditional activation which comprise a group of resilient units (46A, 46B) with conditional activation which transmit torque between the guide washers (34A, 34B) and the annular body (42); and
- a variable hysteresis friction system (62), known as the hysteresis system, of the pre-damper (A2), comprising hysteresis means with conditional activation which, arranged between the body (42) of the pre-damper and the first main guide washer (16A) of the damper (A1), comprise at least one variable hysteresis washer (64) comprising respectively a proximal friction surface (64P) and a distal friction surface (64D), the distal friction surface (64D) being designed to co-operate with a friction surface (66P) which is supported by a resilient washer (66) for application of the hysteresis system (62), the variable hysteresis washer (64) comprising for its activation at least one activation lug (68) which is connected angularly to an associated resilient unit (46A, 46B),
**characterised in that** the friction clutch (10) comprises a so-called interposed friction washer (70), which is connected in rotation by connection means (72) such as lugs to the guide washer (34A) of the pre-damper (A2) and which, axially free, is interposed between the proximal friction surface (64P) of the hysteresis washer (64) and a slide friction system (74), the slide friction system (74) comprising a friction washer (76), known as the slide washer, which is interposed axially between a proximal friction surface (70P) of the interposed washer (70) and the guide washer (34A) of the pre-damper (A2), and is subjected to an axial resilient force which thrusts it in the direction of the guide washer (34A), the slide washer (76) comprising drive means (78), such as inner toothing, which are designed to drive the slide washer (76) in rotation with circumferential play (j) which is smaller than the aforementioned circumferential play (J) between the outer toothing (15e) of the hub (14) and the inner toothing (23) of the body (24) of the damper (A1).

2. Friction clutch (10) according to claim 1, **characterised in that** the resilient axial force which thrusts the slide washer (76) is developed by the resilient washer (66) for application of the hysteresis system (62), such that the slide friction system (74) is of the dependent type.

3. Friction clutch (10) according to one of claims 1 or 2, **characterised in that** the slide washer (76) is made of a metal material, such as steel or a similar material.

4. Friction clutch (10) according to any one of the preceding claims, **characterised in that** the interposed friction washer (70) which is arranged axially between the hysteresis system (62) and the slide system (74) is made of a metal material, such as steel or a similar material.

5. Friction clutch (10) according to any one of claims 1 to 3, **characterised in that** the interposed friction washer (70) which is arranged axially between the hysteresis system (62) and the slide system (74) is made of plastic material.

6. Friction clutch (10) according to any one of the preceding claims, **characterised in that** the hysteresis washer (64) which supports the distal and proximal friction surfaces (64D, 64P) is made of a plastic material.

7. Friction clutch (10) according to any one of the preceding claims, **characterised in that** the hysteresis washer (64) is made of a metal material such as steel, and **in that** at least the distal friction surface (64D) is supported by a friction washer (82) made of plastic material which is integral in rotation with the hysteresis washer (64).

8. Friction clutch (10) according to claim 7, **characterised in that** the proximal friction surface (64P) is supported by a friction washer (84) made of plastic material which is integral in rotation with the hysteresis washer (64), in particular when the interposed friction washer (70) is made of metal material, in order to create friction of the steel / plastic type.

9. Friction clutch (10) according to any one of the preceding claims, **characterised in that** lug (68) for activation of the hysteresis washer (64) comprises surfaces for contact respectively with the associated resilient unit (46A, 46B) with conditional activation and the body (42) of the pre-damper (A2), the surface for contact of the activation lug (68) with the resilient unit comprising hooking means (90) such as a pin, which are designed to co-operate with the associated resilient unit with conditional activation (46A, 46B) in order to hook the hysteresis washer (64) onto the pre-damper (A2).

10. Friction clutch (10) according to any one of the preceding claims, **characterised in that** the hub (14) is produced by sintering.

11. Friction clutch (10) according to any one of the preceding claims, **characterised in that** the friction clutch (10) comprises a pre-assembled module constituted by at least the guide washers (34A, 34B), the body (42) of the pre-damper (A2), the damping means (43A, 43B) comprising at least one resilient unit (46A, 46B) with conditional activation, and the interposed friction washer (70) arranged between the slide washer (76) and the hysteresis washer (64).

12. Friction clutch (10) according to any one of the preceding claims, **characterised in that** the friction clutch (10) comprises:
- first stop means (106) comprising at least one resiliently deformable angular stop which is provided on one (34B) of the guide washers (34A, 34B) which form the entry element of the pre-damper (A2), and which, when the said guide washer (34B) is displaced in at least one of the directions direct (D) or retrograde (R), can damp the impacts between the outer toothing (15e) of the hub (14) and the inner toothing (23) of the body (24) of the damper (A1); and
- second stop means (108) comprising at least one rigid angular stop which is arranged angularly recessed relative to the resiliently deformable angular stop in order to limit the angular deformation of the first stop means, and is constituted by at least one of the surfaces of the inner toothing (23) of the body (24) which forms the exit element of the main damper (A1).
